# EUROPEAN PATENT SPECIFICATION

(11) **EP 3 907 942 B1**
(45) Date of publication and mention of the grant of the patent: **18.09.2024**
(21) Application number: 20749251.3
(22) Date of filing: 11.01.2020
(51) Int. Cl.: H04L 12/46, H04L 45/00, H04L 45/02, H04L 45/50, H04L 45/64, H04L 45/74, H04L 45/745

(54) **DATA FORWARDING METHOD AND RELATED DEVICE**
DATENWEITERLEITUNGSVERFAHREN UND ZUGEHÖRIGE VORRICHTUNG
PROCÉDÉ DE TRANSFERT DE DONNÉES ET DISPOSITIF ASSOCIÉ

(30) Priority: 30.01.2019 CN 201910094301
(43) Date of publication of application: 10.11.2021
(73) Proprietor: Huawei Technologies Co., Ltd., Shenzhen, Guangdong 518129 (CN)
(72) Inventor: ZHANG, Yongkang, Shenzhen, Guangdong 518129 (CN); LIU, Shixing, Shenzhen, Guangdong 518129 (CN); XU, Xinhai, Shenzhen, Guangdong 518129 (CN)
(74) Representative: Goddar, Heinz J.
(86) International application number: PCT/CN2020/071570
(87) International publication number: WO 2020/156105

(56) References cited:
- WO-A1-2018/033769
- CN-A- 101 436 998
- CN-A- 108 768 848
- US-A1- 2003 193 959
- FILSFILS S ET AL.: "Segment Routing Policy for Traffic Engineering", INTERNET-DRAFT: SPRING WORKING GROUP, 5 June 2018 (2018-06-05), pages 1 - 49, XP015126721

## Description

### TECHNICAL FIELD

This application relates to the field of data communications technologies, and in particular, to a data forwarding method and a related apparatus.

### BACKGROUND

With rapid development of data communications technologies, more and more users exchange massive data information by accessing a data transmission network.

Data information is sent by a terminal device of a user to an access device of a data transmission network, and then is transmitted to a backbone network of the data transmission network via the access device. In a data information forwarding process, the data transmission network needs to determine a target forwarding path of the data information based on a service requirement of the data information. To control the data information to be forwarded based on the target forwarding path, the data transmission network needs to encapsulate a packet header for the data information at a controlled start node, where the controlled start node may be referred to as a head node, and the packet header carries the target forwarding path.

With rapid development of service requirements, a length of a target forwarding path may be greater than a maximum path length supported by a device in a data transmission network. Consequently, data information may fail to be normally transmitted in the data transmission network.

WO 2018/033769 A1 discloses a method implemented in an electronic device in a software-defined networking (SDN) and an electronic device serving as a software-defined networking (SDN) controller in a SDN system. In particular, it discloses a method where a path, for one or more packets to transmit through a plurality of network elements is split into sub-paths, each of which is short enough to meet the constraints of the maximum SID depths of the network elements along the sub-paths. The sub-paths are stitched together.to form the whole path.

FILSFILS SET AL., "Segment Routing Policy for Traffic Engineering", INTERNET-DRAFT: SPRING WORKING GROUP, (20180605) discloses details about the concepts of SR Policy and steering into an SR Policy.

### SUMMARY

The scope of the invention is defined by the appended independent claims.

Further embodiments are defined in their respective dependent claims.

This application provides a data forwarding method and a related apparatus, to resolve a problem that data information fails to be normally transmitted in a data transmission network because a target forwarding path is excessively long. According to a first aspect, this application provides a data forwarding method. The method includes:
obtaining, by a head node, to-be-forwarded data;
obtaining, by the head node, a first SID list corresponding to the to-be-forwarded data, where the first SID list is generated based on SIDs of a part of nodes in a target forwarding path;
encapsulating, by the head node in front of the to-be-forwarded data, a packet header including the first SID list, to obtain a to-be-forwarded packet; and
sending, by the head node, the to-be-forwarded packet based on the first SID list.

The target forwarding path includes M nodes, the first SID list comprises a SID of an intermediate node, the SID of the intermediate node comprise a function field and a parameter argument field in the SID, where the function field is used to indicate to replace the first SID list with the second SID list, and the argument field is used to indicate a second SID list, the first SID list is replaced with a second SID list at an intermediate node, and the second SID list is generated based on an X^{th} node to a Y^{th} node in the M nodes, where M is greater than N, N is greater than or equal to 1, X is greater than or equal to N, and Y is less than or equal to M.

In the technical solution provided in this application, the M nodes related in the target forwarding path are classified into at least two subpaths, the SID list that is added by the head node in front of the to-be-forwarded data is generated based on a part of the M nodes, and a first subpath includes the first N nodes. In this way, a maximum quantity of SIDs that needs to be supported in transmission by a device in a data transmission network can be reduced, so that normal data transmission can be ensured when the target forwarding path is relatively long.

In a possible implementation, before the obtaining a first SID list corresponding to the to-be-forwarded data, the method includes: receiving, by the head node, an SR policy sent by a controller, where the SR policy includes the first SID list; and
the obtaining a first SID list corresponding to the to-be-forwarded data includes: obtaining, by the head node based on a service attribute of the to-be-forwarded data, an SR policy corresponding to the to-be-forwarded data; and determining a SID list included in the SR policy as the first SID list corresponding to the to-be-forwarded data.

In a possible implementation, the obtaining a first SID list corresponding to the to-be-forwarded data includes: obtaining, by the head node, a SID of the head node, and reading a function field and a parameter argument field in the SID, where the function field is used to indicate to encapsulate, in front of the to-be-forwarded data, the packet header including the first SID list, and the argument field is used to indicate the first SID list.

In a possible implementation, the head node is connected to an ingress edge node in a DCN through a basic forwarding network;
the target forwarding path includes: the ingress edge node in the DCN, at least one SF node in the DCN, and an egress edge node in the DCN;
the first SID list is generated based on a SID of the ingress edge node in the DCN; the second SID list is generated based on the at least one SF node in the DCN and the egress edge node in the DCN; and the first SID list is replaced with the second SID list at the ingress edge node in the DCN; and
the sending the to-be-forwarded packet based on the first SID list includes: sending the to-be-forwarded packet to the ingress edge node in the DCN based on the first SID list through the basic forwarding network.

In this application, in a manner in which a first SID list in a plurality of SID lists includes only an edge node in the DCN, a SID of an internal node in the DCN network can be prevented from being exposed in the basic forwarding network, so that the data forwarding method provided in this application can be applied to a scenario such as a telco cloud network.

In a possible implementation, the head node is connected to an ingress edge node in a first DCN subnet in a DCN through a first basic forwarding network in a basic forwarding network, and an egress edge node in the first DCN subnet is connected to an ingress edge node in a second DCN subnet in the DCN through a second basic forwarding network in the basic forwarding network;
the target forwarding path includes: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet;
the first SID list is generated based on a SID of the ingress edge node in the first DCN subnet; the first SID list is replaced with the second SID list at the ingress edge node in the first DCN subnet, and the second SID list is generated based on at least one SF node in the first DCN subnet and the egress edge node in the first DCN subnet; and the second SID list is replaced with a third SID list at the egress edge node in the first DCN subnet, and the third SID list is generated based on the ingress edge node in the second DCN subnet; and
the sending the to-be-forwarded packet based on the first SID list includes: sending the to-be-forwarded packet to the ingress edge node in the first DCN subnet based on the first SID list through the first basic forwarding network.

In a possible implementation, the head node is a PRE-AGG, the first DCN subnet is an EDC network, the second DCN subnet is an RDC network, both an ingress edge node and an egress edge node in the EDC network are PE-AGGs, and both an ingress edge node and an egress edge node in the RDC network are DCGWs. For example, a SID of the ingress edge node and a SID of the egress edge node in the EDC network are a SID 1 and a SID 2 of the PE-AGGs respectively, and a SID of the ingress edge node and a SID of the egress edge node in the RDC network are a SID 1 and a SID 2 of the DCGWs respectively.

In a possible implementation, the at least one SF node in the first DCN subnet and the at least one SF node in the second DCN subnet are SF nodes in a telco cloud network; and
the first basic forwarding network is a metro network, and the second basic forwarding network is a core network.

In a possible implementation, an M^{th} node in the target forwarding path is a target node of a VPN service corresponding to the to-be-forwarded data;
the encapsulating, in front of the to-be-forwarded data, a packet header including the first SID list includes:
encapsulating, in front of the to-be-forwarded data, an inner packet header including a SID of the target node;
encapsulating, in front of the inner packet header, an outer packet header including the first SID list; and using to-be-forwarded data having the outer packet header and the inner packet header as the to-be-forwarded packet; and
the sending the to-be-forwarded packet based on the first SID list includes: sending the to-be-forwarded packet based on the first SID list in the outer packet header.

In a possible implementation, the to-be-forwarded packet is an SRv6 packet.

According to a second aspect, this application provides a data forwarding method. The method includes:
receiving, by an intermediate node, a to-be-forwarded packet, where a packet header of the to-be-forwarded packet includes a first SID list; wherein the first SID list comprises a SID of an intermediate node, and the SID of the intermediate node comprise a function field and a parameter argument field in the SID, where the function field is used to indicate to replace the first SID list with the second SID list, and the argument field is used to indicate a second SID list;
obtaining, by the intermediate node, a second SID list corresponding to the to-be-forwarded packet;
replacing, by the intermediate node, the first SID list in the packet header with the second SID list; and
sending, by the intermediate node, the to-be-forwarded packet based on the second SID list.

The first SID list and the second SID list are separately generated based on SIDs of a part of nodes in a target forwarding path; and the target forwarding path includes M nodes, the first SID list is generated based on SIDs of an X^{th} node to a Y^{th} node in the M nodes, and the second SID list is generated based on SIDs of a (Y+1)^{th} node to a Z^{th} node in the M nodes, where X is greater than or equal to 1, Y is greater than or equal to X, and Z is less than or equal to M.

In a possible implementation, the to-be-forwarded packet is an SRv6 packet.

In a possible implementation, the intermediate node is the Y^{th} node in the M nodes.

In a possible implementation, before the obtaining a second SID list corresponding to the to-be-forwarded packet, the method includes: receiving, by the intermediate node, an SR policy sent by a controller, where the SR policy includes the second SID list;
the obtaining a second SID list corresponding to the to-be-forwarded packet includes: when an active SID in the first SID list is a SID of the intermediate node, obtaining, by the intermediate node, an operation instruction, where the operation instruction is used to instruct the intermediate node to replace the first SID list in the to-be-forwarded packet with the second SID list included in the SR policy; and determining, by the intermediate node, the second SID list included in the SR policy corresponding to the operation instruction as the second SID list corresponding to the to-be-forwarded packet; and
the replacing the first SID list in the packet header with the second SID list includes: replacing the first

SID list in the packet header with the second SID list based on an indication of the operation instruction. In a possible implementation, the obtaining a second SID list corresponding to the to-be-forwarded packet includes: obtaining, by the intermediate node, a SID of the intermediate node, and reading a function function field and a parameter argument field in the SID, where the function field is used to indicate to replace the first SID list with the second SID list, and the argument field is used to indicate the second SID list.

In a possible implementation, the intermediate node is an ingress edge node in a DCN, and the intermediate node is connected to a basic forwarding network;
the target forwarding path includes: the ingress edge node in the DCN, at least one SF node in the DCN, and an egress edge node in the DCN;
the first SID list is generated based on a SID of the ingress edge node in the DCN, and the second SID list is generated based on a SID of the at least one SF node in the DCN and a SID of the egress edge node in the DCN;
the receiving, by an intermediate node, a to-be-forwarded packet includes: receiving, by the intermediate node through the basic forwarding network, the to-be-forwarded packet sent by a head node; and
the sending the to-be-forwarded packet based on the second SID list includes: sending the to-be-forwarded packet to a first SF node in the at least one SF node in the DCN based on the second SID list through an internal node in the DCN.

In a possible implementation, the intermediate node is an egress edge node in a first DCN subnet in a DCN, and an egress edge node in the first DCN subnet is connected to an ingress edge node in a second DCN subnet in the DCN through a basic forwarding network;
the target forwarding path includes: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet;
the first SID list is generated based on the at least one SF node in the first DCN subnet and the egress edge node in the first DCN subnet;
the second SID list is generated based on the ingress edge node in the second DCN subnet, or the second SID list is generated based on the at least one SF node in the second DCN subnet and the egress edge node in the second DCN subnet;
the receiving, by an intermediate node, a to-be-forwarded packet includes: receiving, by the intermediate node through an internal node in the first DCN subnet, the to-be-forwarded packet sent by a last SF node in the at least one SF node in the first DCN subnet; and
the sending the to-be-forwarded packet based on the second SID list includes: sending the to-be-forwarded packet to the ingress edge node in the second DCN subnet based on the second SID list through the basic forwarding network.

In a possible implementation, the first DCN subnet is an EDC network, the second DCN subnet is an RDC network, both an ingress edge node and an egress edge node in the EDC network are PE-AGGs, and both an ingress edge node and an egress edge node in the RDC network are DCGWs; and a SID of the ingress edge node and a SID of the egress edge node in the EDC network are a SID 1 and a SID 2 of the PE-AGGs respectively, and a SID of the ingress edge node and a SID of the egress edge node in the RDC network are a SID 1 and a SID 2 of the DCGWs respectively. In a possible implementation, at least one SF node in the EDC network and at least one SF node in the RDC network are SF nodes in a telco cloud network.

In a possible implementation, Z is less than M;
an M^{th} node in the target forwarding path is a target node of a VPN service corresponding to the to-be-forwarded packet;
the to-be-forwarded packet has an outer packet header and an inner packet header, where the outer packet header is encapsulated in front of the inner packet header;
the outer packet header includes the first SID list, and the inner packet header includes a SID of the target node of the VPN service;
the replacing the first SID list in the packet header with the second SID list includes: replacing the first SID list in the outer packet header with the second SID list; and
the sending the to-be-forwarded packet based on the second SID list includes: sending the to-be-forwarded packet based on the second SID list in the outer packet header.

According to a third aspect, this application provides a data forwarding system. The system includes:
a head node, where the head node is configured to perform the data forwarding method according to the first aspect; and
at least one intermediate node, where the intermediate node is configured to perform the data forwarding method according to the second aspect.

In a possible implementation, the system further includes a tail node, where the tail node is configured to perform the data forwarding method according to the third aspect or the fourth aspect. The head node may be a PE-AGG, the intermediate node may be a PRE-AGG or a DCGW, and the tail node may be a DCGW.

In a possible implementation, the system further includes a controller, where the controller is configured to perform the data forwarding method according to the fifth aspect. The controller may be a DCN controller.

According to a fourth aspect, this application provides a data forwarding apparatus, applied to a network system, where the network system includes a head node, an intermediate node, and a tail node, the apparatus is located on the head node, and the apparatus includes:
a receiving module, configured to receive to-be-forwarded data;
a processing module, configured to obtain a first SID list corresponding to the to-be-forwarded data, where the first SID list is generated based on SIDs of a part of nodes in a target forwarding path; and encapsulate, in front of the to-be-forwarded data, a packet header including the first SID list, to obtain a to-be-forwarded packet; and
a sending module, configured to send the to-be-forwarded packet based on the first SID list, where the target forwarding path includes M nodes, the first SID list is generated based on first N nodes in the M nodes, the first SID list comprises a SID of an intermediate node, the SID of the intermediate node comprise a function field and a parameter argument field in the SID, where the function field is used to indicate to replace the first SID list with the second SID list, and the argument field is used to indicate a second SID list" and the second SID list is generated based on an X^{th} node to a Y^{th} node in the M nodes, where M is greater than N, N is greater than or equal to 1, X is greater than or equal to N, and Y is less than or equal to M.

According to an fifth aspect, this application provides a data forwarding apparatus, applied to a network system, where the network system includes a head node, an intermediate node, and a tail node, the apparatus is located on the intermediate node, and the apparatus includes:
a receiving module, configured to receive a to-be-forwarded packet, where a packet header of the to-be-forwarded packet includes a first SID list, wherein the first SID list comprises a SID of an intermediate node, and the SID of the intermediate node comprise a function field and a parameter argument field in the SID, where the function field is used to indicate to replace the first SID list with the second SID list, and the argument field is used to indicate a second SID list;
a processing module, configured to obtain a second SID list corresponding to the to-be-forwarded packet, and replace the first SID list in the packet header with the second SID list; and
a sending module, configured to send the to-be-forwarded packet based on the second SID list, where the first SID list and the second SID list are separately generated based on SIDs of a part of nodes in a target forwarding path; and the target forwarding path includes M nodes, the first SID list is generated based on SIDs of an X^{th} node to a Y^{th} node in the M nodes, and the second SID list is generated based on SIDs of a (Y+1)^{th} node to a Z^{th} node in the M nodes, where X is greater than or equal to 1, Y is greater than or equal to X, and Z is less than or equal to M.

### BRIEF DESCRIPTION OF DRAWINGS

FIG. 1 is a schematic diagram 1 of a network architecture;
FIG. 2A and FIG. 2B are a schematic diagram 1 of an interaction procedure of a data forwarding method according to an embodiment of this application;
FIG. 3A, FIG. 3B, and FIG. 3C are a schematic diagram 2 of an interaction procedure of a data forwarding method according to an embodiment of this application;
FIG. 4 is a schematic diagram 2 of a network architecture;
FIG. 5 is a schematic diagram 3 of a network architecture;
FIG. 6A and FIG. 6B are a schematic diagram 3 of an interaction procedure of a data forwarding method according to an embodiment of this application;
FIG. 7 is a schematic diagram 4 of a network architecture;
FIG. 8A and FIG. 8B are a schematic diagram 4 of an interaction procedure of a data forwarding method according to an embodiment of this application;
FIG. 9 is a schematic diagram of a network architecture in which a data forwarding method is applied to a service scenario;
FIG. 10 is a schematic diagram of an overall framework of a processing procedure in which a data forwarding method is applied to a service scenario;
FIG. 11 is a diagram 1 of a processing procedure in which a data forwarding method is applied to a scenario;
FIG. 12A and FIG. 12B are a diagram 2 of a processing procedure in which a data forwarding method is applied to a service scenario;
FIG. 13 is a schematic structural diagram of a data forwarding apparatus; and
FIG. 14 is a schematic structural diagram of a node device according to an embodiment of this application.

### DESCRIPTION OF EMBODIMENTS

Terms used in implementations of this application are merely intended to explain specific embodiments of this application, but are not intended to limit this application.

Technical solutions provided in this application are used to implement a control process of transmitting to-be-forwarded data based on a preset target forwarding path in a data transmission network. In this application, the data transmission network may include several nodes, and the target forwarding path may be defined as a list of node identifiers including node identifiers of at least two nodes.

A data forwarding method provided in this application may be applied to a plurality of network architectures. The following separately describes, with reference to various network architectures, technical solutions and technical effects of the data forwarding method provided in this application.

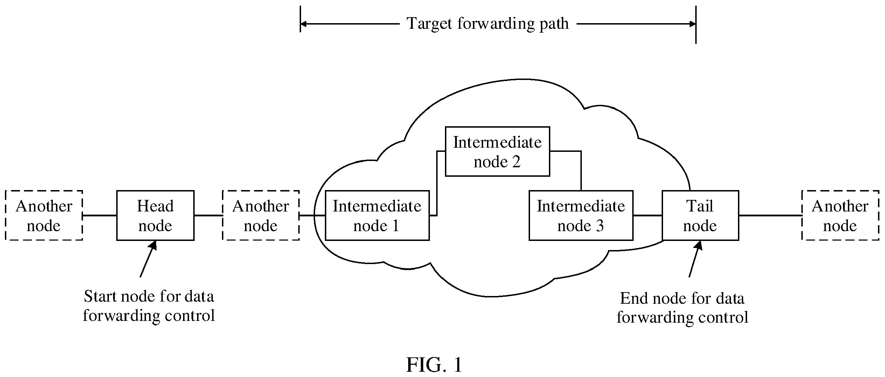

FIG. 1 is a schematic diagram 1 of a network architecture. As shown in FIG. 1, in the network architecture, a data transmission network may include a head node, a tail node, an intermediate node, and another node. The head node may be a start node in a process of controlling to-be-forwarded data to be forwarded based on a target forwarding path, the tail node may be an end node in the control process, the intermediate node may be a node in the target forwarding path, and the another node may be located at another location in the transmission network. For example, the another node may be located before the head node, after the tail node, or between intermediate nodes. The target forwarding path may include at least one intermediate node, and intermediate nodes in the target forwarding path may be adjacent or may be connected through another node. The target forwarding path may further include one or more other nodes. In this embodiment of this application, the target forwarding path may not include the head node, or may include the head node.

Based on the network architecture shown in FIG. 1, to control the to-be-forwarded data to be forwarded based on the target forwarding path, in a control manner, when the to-be-forwarded data arrives at the head node, the head node may preprocess the to-be-forwarded data, and encapsulate, in front of the to-be-forwarded data, a packet header including the target forwarding path, to obtain a to-be-forwarded packet, where the target forwarding path may be used to indicate a node in the data transmission network to forward the to-be-forwarded data to the tail node in a node list corresponding to the target forwarding path in the packet header; and the tail node may perform control releasing processing on the packet, and remove the packet header including the target forwarding path from the to-be-forwarded packet, to obtain the to-be-forwarded data. Then, the to-be-forwarded data may continue to be transmitted in the network based on an original destination address of the to-be-forwarded data. For example, the to-be-forwarded data may be a data frame, for example, an Ethernet frame. In this case, the destination address of the to-be-forwarded data may be a destination MAC address in the Ethernet frame. For another example, the to-be-forwarded data may be a network layer packet, for example, an IP packet. In this case, the destination address of the to-be-forwarded data may be a destination IP address in the IP packet.

In an actual application, a segment routing (Segment Routing, SR) technology defined by the source packet routing in networking (Source Packet Routing in Networking, SPRING) working group (WorkGroup, WG) in the internet engineering task force (The Internet Engineering Task Force, IETF) may be used to implement the foregoing control manner.

SR is a tunneling technology based on a source routing forwarding mode. For one SR tunnel in the transmission network, an ingress node and an egress node of the SR tunnel may be respectively considered as the head node and the tail node in the foregoing control manner. The SR tunnel may correspond to a target forwarding path that includes at least two nodes and that is in the foregoing control manner. A basic design idea of the SR is that a per-flow (per-flow) status needs to be maintained only on the head node, but does not need to be maintained on the intermediate node and the tail node. The per-flow status is used by the SR tunnel to reserve a resource, such as bandwidth, for each service flow.

In the SR technology, an identifier of a node may be represented by a segment identifier (Segment Identifier, SID). The SID may be an instruction with topology or service semantics. The target forwarding path corresponding to the SR tunnel may be generated based on SIDs of the at least two nodes. For example, the target forwarding path may be formed by successively arranging the SIDs of the at least two nodes in a preset forwarding sequence. For example, identifiers of the head node, an intermediate node 1, an intermediate node 2, an intermediate node 3, and the tail node in the data transmission network shown in FIG. 1 may be a SID 1, a SID 2, a SID 3, a SID 4, and a SID 5 respectively. In an example, if the to-be-forwarded data needs to be transmitted to the tail node via the intermediate node 1, the intermediate node 2, and the intermediate node 3, a corresponding target forwarding path may be represented as {SID 2; SID 3; SID 4; SID 5}. In another example, if the to-be-forwarded data needs to be transmitted to the tail node via the intermediate node 1 and the intermediate node 3, a corresponding target forwarding path may be represented as {SID 1; SID 3; SID 4; SID 5}.

In the SR technology, an SR data plane may be based on multi-protocol label switching (Multi-Protocol Label Switching, MPLS), or may be based on IPv6. The SR data plane based on multi-protocol label switching is referred to as the instantiation of SR on the MPLS data plane (SR MPLS) and the SR data plane based on IPv6 is referred to as the instantiation of SR on the IPv6 data plane (Segment Routing over IPv6, SRv6). When an SRv6 technology is used to implement the foregoing control manner, SIDs of nodes in the target forwarding path may form a SID list (SID list) based on a service requirement, to indicate a forwarding path of an SRv6 tunnel defined in a manner in which SRv6 is used as a data plane. Each SID list may include at least one SID. For SRv6, a SID is a 16-bit IPv6 address in form and includes three parts: locator (Locator), function (Function), and argument (Argument). Table 1 schematically shows a structure of a SID in an SRv6 packet.

**Table 1**

| SID in the SRv6 packet (16 bits in total) | | |
|---|---|---|
| Locator | Function | Argument |

The locator may be used for addressing, that is, related to routing. The function may be used to specify a function related to the SID, such as a topology function or a service function. The argument is an optional parameter, and may be used to specify a parameter for performing an operation related to the function. The function and the argument may be network programming parameters used to implement a network programming function of SRv6. The network programming function is described in the following.

It should be noted that for an SRv6 tunnel defined in an SRv6 mode, a traceroute function in common IPv6 may be used to detect a path of the SRv6 tunnel. In other words, the SID needs to support route forwarding based on a common IPv6 address on a common node other than an intermediate node in a forwarding path. In an example, if a locator part in the SID may match a network segment address in a routing table of the common node, the common node may forward the packet based on a next-hop address corresponding to the network segment address. In addition, some special nodes in SRv6 need to support an operation of modifying a SID list in an SRv6 packet header.

In the SR technology, for a packet of an SRv6 type (referred to as an SRv6 packet below), the IETF 6man WG defines that an IPv6 segment routing header (Segment Routing Header, SRH) may be used to carry a SID list, to specify a forwarding path of the IPv6 packet. The SRH may be an IPv6 routing header (Routing Header) with Routing Type = 4. For example, a name of an IE corresponding to the SRH may be draft-ietf-6man-segment-routing-header-14. A loose source routing mode may be used for the SRH. That is, not all hop nodes in the forwarding path need to support and parse the SRH, and not all hop nodes in the forwarding path need to be included in the SID list in the SRH, either. In an example, the SID list in the SRH may include only one node. In some scenarios, an SRv6 tunnel packet may even not include an SRH field. For example, when a SID list that needs to be added includes a SID of only one node, the SID of the node may be added to a destination address field of a to-be-forwarded packet.

In the SR technology, before an SR tunnel is used to forward data based on a target forwarding path, the SR tunnel needs to be first established, that is, a SID of each node needs to be allocated and a SID list corresponding to the target forwarding path needs to be determined. The SID list used to establish the SR tunnel may be specified by using an explicit candidate path (Explicit candidate path) or a dynamic candidate path (Dynamic candidate path). In an example, a controller of the data transmission network may allocate a SID to each node. In another example, target forwarding paths may be planned for various types of to-be-forwarded data that arrive at the head node.

In the SR technology, when data is to be forwarded through the SRv6 tunnel defined in the SRv6 mode, nodes through which an SRv6 packet may pass in the data transmission network may be classified into the following device roles (device role).

Non-SRv6 node (Non-SRv6 node): The non-SRv6 node is a node that does not support or use an SRv6 function. This type of node can only forward a common IPv6 packet. For example, this type of node does not support to forward a packet based on a SID list carried in an SRH field of a packet header. For another example, this type of node supports to forward only a to-be-forwarded packet in which an IP address in a destination address is native (Native) IPv6.

Forwarding node (Transit node): The forwarding node is a node on which the SRv6 function has been enabled. An active SID (Active SID) of an SRv6 packet is not installed in my local SID table (My Local SID table) on this type of node. It should be noted that a SID configured in my local SID table on a node is a SID of the node. An active SID of an SRv6 packet is a SID in a SID list carried in the SRv6 packet. The active SID is used to indicate a destination node at which the SRv6 packet is expected to arrive. When a node receives an SRv6 packet and an active SID in a SID list carried in a packet header of the SRv6 packet is not a SID of the node (that is, the active SID in the SRv6 packet is not installed), the node needs to forward the SRv6 packet based on a destination node indicated by the active SID. In this case, the node only forwards the packet without performing special processing. Therefore, the node serves as a forwarding node.

Binding segment identifier node (Binding Segment Identifier node, BSID node): The binding segment identifier node is a node on which the SRv6 function has been enabled and that uses a BSID mechanism (draft-ietf-spring-segment-routing-policy-01) to steer traffic to a new SR policy (SR policy). In other words, the BSID node may be a node configured with an SR policy.

Endpoint node (Endpoint node): The endpoint node is a node on which the SRv6 function has been enabled, and an active SID of an SRv6 packet has been installed in my local SID table on the node. It should be noted that, when a node receives an SRv6 packet and an active SID in a SID list carried in a packet header of the SRv6 packet is a SID of the node (that is, the active SID of the SRv6 packet has been installed on the node), the node needs to identify, as a new active SID, a next SID of a SID that is currently identified as the active ID and that is in the SID list carried in the SRv6 packet. Then, the current node continues to forward the SRv6 packet based on a destination node indicated by the new active SID. In this case, the node serves as an endpoint node. In other words, the endpoint node may be a node in a SID list corresponding to a target forwarding path.

It should be noted that my local SID table is used to implement an SRv6 network programming function. This table maintains all local SIDs (SIDs allocated and interpreted by the node) of the endpoint node. Based on the description in draft-filsfils-spring-srv6-network-programming-05, the SIDs in my local SID table need to be explicitly configured and generated.

It can be learned that the foregoing device roles (device role) are classified based on matching between an active SID and my local SID table in a forwarding process.

A process of forwarding to-be-forwarded data through an SRv6 tunnel may include as follows.

A head node (which may be considered as a BSID node) steers traffic to an SR policy. The head node obtains, based on a current active candidate path (active Candidate path) of the SR policy, a SID list corresponding to a specified path. Then, the head node encapsulates, in front of the to-be-forwarded data, a packet header including the SID list, to obtain a to-be-forwarded packet through encapsulation, where a first SID in the SID list is indicated as an active SID; and then forwards the to-be-forwarded packet to a downstream device by using the active SID as a destination address (Destination Address, DA). At any time when an SRv6 packet is forwarded through an SRv6 tunnel, there is only one active SID (Active SID) in a SID list of the SRv6 packet. The active SID is used to identify a SID of a next-hop node. When receiving the SRv6 packet, an intermediate node queries my local SID table based on the active SID (that is, an IPv6 DA). If a matching entry exists (that is, the active SID is a SID of the intermediate node), the intermediate node performs related processing based on a function (Function) associated with the hit local SID entry. After completing the related processing, the intermediate node updates the active SID in the SID list (for example, indicates a next SID of the current active SID in the SID list as a new active SID), and then the intermediate node forwards the SRv6 packet to a downstream node based on a destination node indicated by the updated active SID. When the SRv6 packet is forwarded to a tail node (a SID of the tail node is the same SID as the active SID and is a last SID in the SID list), the tail node may remove the packet header encapsulated in front of the to-be-forwarded data. One or more intermediate nodes (each intermediate node may be considered as an endpoint node) may exist between the head node and the tail node. One or more other nodes (which may be considered as non-SRv6 nodes or forwarding nodes) may exist between the head node and the intermediate node. One or more other nodes (which may be considered as non-SRv6 nodes or forwarding nodes) may exist between the intermediate node and the tail node.

It should be noted that, in the SR technology, an SR tunnel technology defined in an SRv6 manner has a general feature of SR. A difference between the SR tunnel technology defined in the SRv6 manner and an SR tunnel technology defined in an MPLS manner lies in that the tunnel technology defined in the SRv6 manner supports network programming. With network programming, the tunnel technology defined in the SRv6 manner has powerful scalability.

In the SR technology, the function and the argument in the SID may be used as network programming parameters that support a network programming function. The network programming parameter may be used to indicate a node on a tunnel to process a packet based on a function (function) corresponding to the network programming parameter, where the tunnel is defined in the SRv6 manner. The SR technology supports to define a plurality of types of functions.

For example, an end function (End Function) may be used to implement a processing step in which an endpoint node updates an active SID and the endpoint node is indicated to forward an SRv6 packet based on an updated active SID. For example, the end function may include the following processing logic:
IF NH=SRH and SL>0
decrement SL
update the IPv6 DA with SRH[SL] //update an IPv6 destination address (Destination Address, DA)
FIB lookup on the update DA //forward based on the updated DA
forward according to the matched entry
ELSE
drop the packet

Logically, another function may be a variant of the end function. It should be noted that an advantage of SRv6 network programming lies in that the function allows a plurality of extension forms. For example, an SRv6 network programming function allows logical extension in "any" form.

For another example, in the foregoing process of forwarding the to-be-forwarded data through the SRv6 tunnel, the head node in the transmission network may be a BSID node, and a network programming parameter carried in the SRv6 packet may be used to indicate the BSID node to preprocess SRv6 packet according to an SR policy (SR policy) corresponding to the SRv6 packet. For example, the BSID node may generate, based on a SID list corresponding to the SR policy, a packet header including the SID list, and encapsulate the packet header in front end of the to-be-forwarded data, to obtain a to-be-forwarded SRv6 packet.

In addition, an SRv6 technology that supports network programming may also be applied to a plurality of application scenarios. For example, the SRv6 technology may implement a packet forwarding control manner such as a border gateway protocol (Border Gateway Protocol, BGP), an SR-based layer 3 VPN service (SR L3VPN), an Ethernet VPN-based layer 2 VPN service (EVPN L2VPN), an Ethernet VPN-based layer 3 VPN service (EVPN L3VPN), or a service function chain (Service Function Chain, SFC). In an example, a forwarding path that corresponds to a packet and that is defined based on the SR L3VPN may be used as a SID list, and the SID list is added to a packet header at the head node of the SRv6 tunnel.

An IE name corresponding to network programming may be draft-filsfils-spring-srv6-network-programming-05.

It should be further noted that, in the SR technology, to shield topology details of a part of networks and avoid a problem of insufficient hardware chip MSD specifications, a BSID technology may be used to steer (steer) traffic to an SR policy. A BSID node is defined as a node with a special function on an SR tunnel. One or more SR policies may be preset on the BSID node, and each SR policy may correspond to one SID list. With reference to the foregoing forwarding procedure, the head node is assigned a role of the BSID node, and the head node may receive an SR policy in advance, where the SR policy includes a target forwarding path, and the SR policy may be delivered by a controller device in a network. The BSID node may encapsulate, in front of the to-be-forwarded data, a packet header including the SID list, to generate a to-be-forwarded packet. For example, the SID list may be located in an SRH field or a destination address field.

In the foregoing control manner, the SID list encapsulated by the head node in front of the to-be-forwarded data is generated based on SIDs of all nodes that need to be passed through in a complete target forwarding path. When there are a large quantity of nodes that need to be passed through, a length of the SID list is very long. For example, the complete target forwarding path may include an intermediate node 1, an intermediate node 2, an intermediate node 3, ..., and an intermediate node 19, and a tail node. A SID list formed by SIDs of the nodes may be {SID 2; SID 3; SID 4;..., SID 20; SID 21}. Therefore, the BSID node and the endpoint node in the data transmission network need to support a SID list whose length is 20. It can be seen that, the implementation of the foregoing control manner has a relatively high requirement for a maximum SID depth (Maximum SID Depth, MSD) that needs to be supported by a device in the data transmission network. In some scenarios, when MSDs supported by some low-end devices in the data transmission network are less than a length of a SID list required in some service scenarios, data cannot be forwarded along the complete target forwarding path.

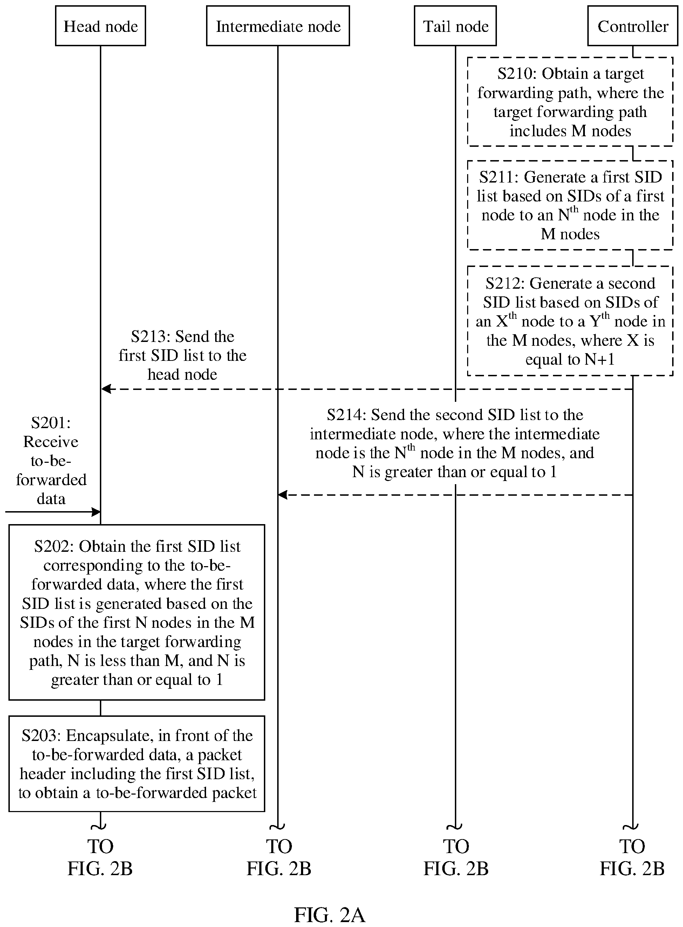

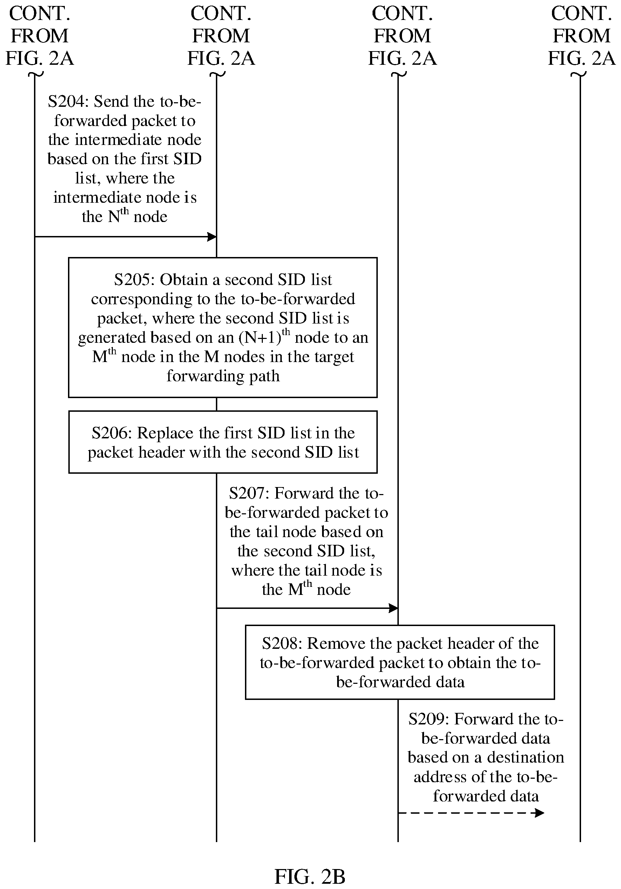

To resolve the foregoing problem, the embodiments of this application provide the following data forwarding method. FIG. 2A and FIG. 2B are a schematic diagram 1 of an interaction procedure of a data forwarding method according to an embodiment of this application. This embodiment of this application relates to a head and an intermediate node.

The following uses the data transmission network shown in FIG. 1 as an example for description. A target forwarding path may include an intermediate node 1, an intermediate node 2, an intermediate node 3, and the tail node. A SID list corresponding to the target forwarding path formed by these nodes is {SID 2; SID 3; SID 4; SID 5}.

To make a length of the SID list that needs to be added to to-be-forwarded data or a to-be-forwarded packet be relatively short, in an example, before the head node receives the to-be-forwarded data, on a control plane, a controller in the network may divide the target forwarding path into several segments. Division into two segments is used as an example. The SID list corresponding to the target forwarding path may be divided into a first SID list and a second SID list. Then, the controller may deliver the first SID list to the head node, and deliver the second SID list to a last node in the first SID list. The intermediate node in the interaction procedure shown in FIG. 2A and FIG. 2B may be the last node in the first SID list. Then, at a forwarding layer (which may also be referred to as a data layer), the head node, the intermediate node, and the tail node may implement the following steps. As shown in FIG. 2A and FIG. 2B, this embodiment of this application includes the following steps.

S201: The head node receives to-be-forwarded data.

The to-be-forwarded data may be a data frame or an IP packet. For example, the data frame may be an Ethernet (Ethernet) frame. The to-be-forwarded data may carry service attributes such as type information of a requested service and service-related parameter information. For example, the to-be-forwarded data is a video file and a file name on a server that are requested to be accessed. In an example, the head node may receive the to-be-forwarded data from another node.

S202: The head node obtains the first SID list corresponding to the to-be-forwarded data, where the first SID list is generated based on SIDs of first N nodes in M nodes in the target forwarding path, N is less than M, and N is greater than or equal to 1.

The head node may obtain, based on the service attribute of the to-be-forwarded data, an SR policy 1 corresponding to the to-be-forwarded data; and determine a SID list included in the SR policy 1 as the first SID list corresponding to the to-be-forwarded data. It should be noted that, from a perspective of a service, different service attributes may correspond to different target forwarding paths. The controller may pre-plan target forwarding paths corresponding to various service attributes, segment a target forwarding path with a relatively long length, and then, separately deliver SID lists obtained by segmenting a target forwarding path to the head node and another corresponding intermediate node by using different SR policies. The head node may store a correspondence between an SR policy and a service attribute, and when receiving to-be-forwarded data, obtain a corresponding SR policy based on a service attribute carried in the to-be-forwarded data.

In this application, if N is equal to 1, the first SID list is generated based on a SID of a first node in the target forwarding path. In other words, the first SID list may include the SID of the first node in the target forwarding path. If N is greater than 1, the first SID list is generated based on SIDs of a first node to an N^{th} node in the target forwarding path. In other words, the first SID list may include the SIDs of the first node to the N^{th} node.

S203: The head node encapsulates, in front of the to-be-forwarded data, a packet header including the first SID list, to obtain a to-be-forwarded packet.

The to-be-forwarded packet obtained through encapsulation may include two parts: the packet header and the to-be-forwarded data. The packet header includes the first SID list. It should be noted that, that the packet header is encapsulated in front of the to-be-forwarded data means that the packet header is encapsulated outside the to-be-forwarded data rather than inside the to-be-forwarded data. Table 2 schematically shows the to-be-forwarded packet obtained through encapsulation.

**Table 2**

| To-be-forwarded packet | |
|---|---|
| Added packet header | To-be-forwarded data |

In an implementation of this application, when the first SID list includes only one SID, the SID may be directly used as a destination address in the packet header, and the packet header is encapsulated in front of the to-be-forwarded data. In another implementation, when the first SID list includes two or more SIDs, the SID list may be added to an SRH field in the packet header, and the packet header encapsulated with the SRH field is encapsulated in front of the to-be-forwarded data. In this application, the foregoing two implementations may be used when the head node encapsulates, in front of the to-be-forwarded data, a packet header including any SID list and when the intermediate node replaces a SID list. S204: The head node sends the to-be-forwarded packet to an intermediate node based on the first SID list, where the intermediate node is the N^{th} node.

In this application, when the SID list in the packet header includes only one SID, the SID may be located in the destination address in the packet header, and the head node may send the to-be-forwarded data to the intermediate node based on the destination address in the packet header. When the SID list in the packet header includes at least two SIDs, the SID list is added to the SRH field in the packet header. The head node needs to set a first SID that has not arrived and that is in the SID list to an active SID, and set the active SID as the destination address in the packet header, to indicate a next-hop address of the to-be-forwarded packet.

S205: The intermediate node obtains a second SID list corresponding to the to-be-forwarded packet, where the second SID list is generated based on an (N+1)^{th} node to an M^{th} node in the M nodes in the target forwarding path.

When the intermediate node receives the to-be-forwarded packet, and an active SID in the first SID list in the to-be-forwarded packet is a SID of the intermediate node, the intermediate node obtains an operation instruction matching the active SID, where the operation instruction is used to instruct the intermediate node to replace the first SID list in the to-be-forwarded packet with a second SID list included in an SR policy 2; and the intermediate node determines the second SID list included in the SR policy 2 corresponding to the operation instruction as the second SID list corresponding to the to-be-forwarded packet.

It should be noted that the operation instruction may be a processing step that matches the active SID and that is in my local SID table, for example, an operation corresponding to the SID. According to the claimed invention, the operation instruction is a processing step indicated by a function field and an argument field of the active SID.

S206: The intermediate node replaces the first SID list in the packet header with the second SID list.

In this application, the intermediate node may replace the first SID list in the packet header with the second SID list in two manners.

In an implementation, the intermediate node may completely replace the packet header of the received to-be-forwarded data with a new packet header. For example, an original packet header may be removed first, and then a new packet header is encapsulated, where the new packet header includes the second SID list. If the second SID list includes only one SID, the second SID list in the new packet header may be located in a destination address in the new packet header. If the second SID list includes two or more SIDs, the second SID list in the new packet header may be located in an SRH field in the new packet header, a SID of a next-hop node is set to an active SID, and the active SID is set to the destination address in the packet header. Another field in the new packet header may be filled based on a value of the field in the original packet header or generated based on an actual forwarding scenario requirement of a service. For example, the packet header may further include fields such as a source address and a flow label, and the fields may be copied or set to new values based on an actual status of a DCGW according to a local policy of the DCGW.

In another implementation, the intermediate node may alternatively replace only the SID list in the to-be-forwarded packet. When the first SID list on the head node is located in the destination address in the packet header, the intermediate node adds the second SID list to the SRH field in the packet header of the to-be-forwarded packet, sets a SID of a next-hop node to an active SID, and sets the active SID to the destination address in the packet header. When the first SID list on the head node is located in the SRH field in the packet header, the intermediate node may replace the first SID list in the SRH field in the original packet header with the second SID list, set a SID of a next-hop node to an active SID, and set the active SID to the destination address in the packet header.

S207: The intermediate node forwards the to-be-forwarded packet to the tail node based on the second SID list, where the tail node is the M^{th} node.

The intermediate node forwards the packet in a node list indicated by the second SID list, and finally forwards the packet to the tail node. It should be noted that, in the embodiments of this application, when the SID of the intermediate node is an active SID, a SID of a next node at which the packet has not arrived needs to be set to an active SID, and the active SID is set to the destination address in the packet header, to indicate a next-hop address of the to-be-forwarded packet.

S208: The tail node removes the packet header of the to-be-forwarded packet to obtain the to-be-forwarded data.

In an example, both the head node and the intermediate node may be BSID nodes in an SRv6 tunnel. The intermediate node may be an endpoint node in the SRv6 tunnel. The tail node may be a last node in the target forwarding path.

In this application, the M nodes related in the target forwarding path are classified into at least two subpaths, a first subpath includes the first N nodes, and a second subpath includes the (N+1)^{th} node to the M^{th} node. In this way, a quantity of SIDs in a SID list in a to-be-forwarded packet that is transmitted by a device in the data transmission network may not exceed a quantity of MSDs supported by a single device. Therefore, normal data transmission can be ensured when the target forwarding path is relatively long.

In this embodiment of this application, as shown in FIG. 2A and FIG. 2B, after S208, S209 may be further included. S209: The tail node forwards the to-be-forwarded data based on a destination address of the to-be-forwarded data.

For example, the to-be-forwarded data may be a data frame or an IP packet, and the destination address of the to-be-forwarded data may be a destination MAC address in the data frame or a destination IP address in the IP packet. The tail node may continue to forward the to-be-forwarded data based on the destination MAC address in the data frame or the destination IP address in the IP packet.

In this embodiment of this application, for example, as shown in FIG. 2A and FIG. 2B, before S201, that the controller in the data transmission network pre-divides a target forwarding path into a SID list of each segment and delivers the SID list of each segment may include the following steps.

S210: The controller obtains a target forwarding path, where the target forwarding path includes M nodes.

The controller may pre-plan target forwarding paths based on various types of to-be-forwarded data that arrive at the head node. For example, the controller may plan different target forwarding paths for to-be-forwarded data that requests various services, segment each target forwarding path, and deliver a target forwarding path obtained through segmentation to a corresponding head node and intermediate node. For example, a target forwarding path that passes through several core network SF nodes in a telco cloud network may be planned for to-be-forwarded data that requests to access the internet (Internet). The to-be-forwarded data may carry a relevant service attribute identifying that a requested service is to access the internet.

S211: The controller generates a first SID list based on SIDs of a first node to an N^{th} node in the M nodes.

In an example, the controller may use SIDs of the intermediate node 1 and the intermediate node 2 as the first SID list, and use SIDs of the intermediate node 3 and the tail node as the second SID list. In another example, the controller may use a SID of the intermediate node 1 as the first SID list, and use SIDs of the intermediate node 2, the intermediate node 3, and the tail node as the second SID list. In another embodiment of this application, the M nodes in the target forwarding path may alternatively be classified into three segments.

S212: The controller generates a second SID list based on SIDs of an X^{th} node to a Y^{th} node in the M nodes, where X is equal to N+1.

S213: The controller sends the first SID list to the head node.

The sending the first SID list to the head node may include: sending an SR policy 1 to the head node, where the SR policy 1 includes the first SID list.

S214: The controller sends the second SID list to the intermediate node, where the intermediate node is the N^{th} node in the M nodes, and N is greater than or equal to 1.

The sending the second SID list to the intermediate node may include: sending an SR policy 2 to the intermediate node, where the SR policy 2 includes the second SID list.

In this application, for the controller, a receiver of the first SID list should be the head node. The head node is configured to encapsulate, in front of to-be-forwarded data, a packet header including the first SID list (refer to Table 2), to generate a to-be-forwarded packet; and send the to-be-forwarded packet to the intermediate node based on the first SID list in the to-be-forwarded packet. A receiver of the second SID list should be the intermediate node. The intermediate node is configured to replace the first SID list in the packet header of the to-be-forwarded packet with the second SID list, and forward the to-be-forwarded packet based on a destination address in a packet header obtained through replacement.

In another embodiment of this application, if three segments are obtained through division, that is, a first SID list, a second SID list, and a third SID list, the first SID list may be delivered to the head node, the second SID list is delivered to a last node in the first SID list, and the third SID list is delivered to a last node in the second SID list. In this case, the last node in the first SID list and a last node in the second SID list may be the intermediate node 1 and the intermediate node 2 respectively.

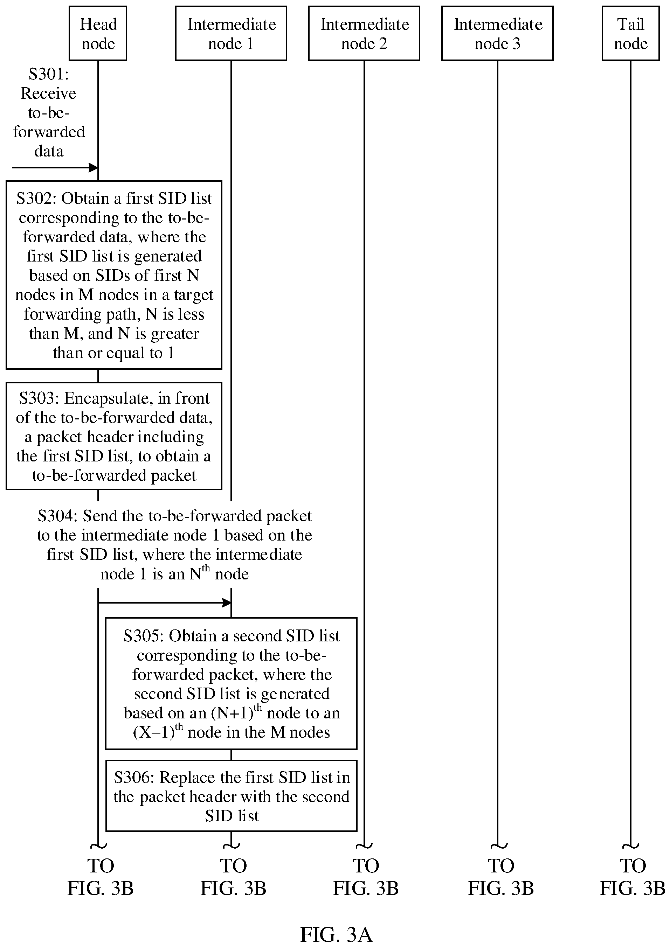

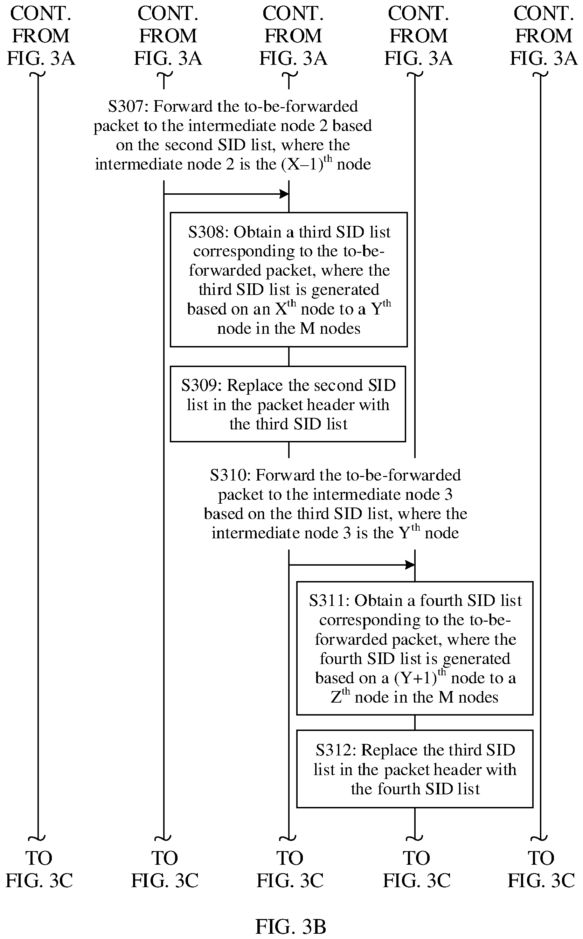

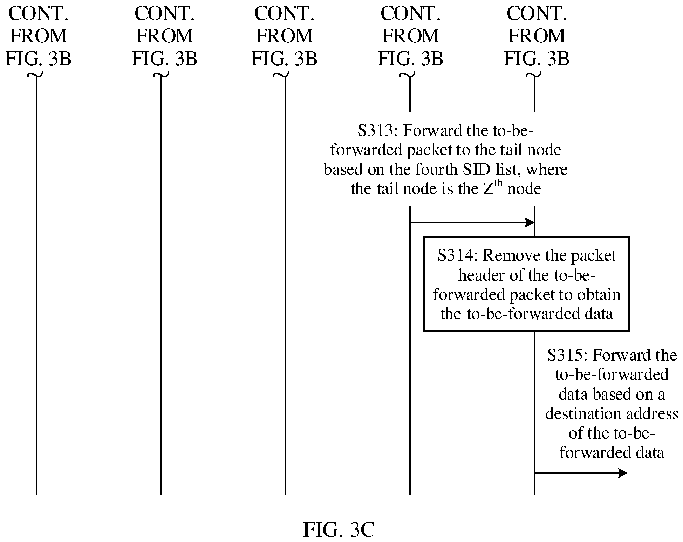

In this embodiment of this application, the target forwarding path may alternatively be divided into more than two subpaths. For example, there may be a plurality of intermediate nodes in the data transmission network. For example, there may be three intermediate nodes. FIG. 3A, FIG. 3B, and FIG. 3C are a schematic diagram 2 of an interaction procedure of a data forwarding method according to an embodiment of this application. This embodiment of this application relates to a head node, an intermediate node 1, an intermediate node 2, an intermediate node 3, a tail node, and the like. In a possible scenario, other nodes in a target forwarding path may be included between the intermediate node 1 and the intermediate node 2 and between the intermediate node 3 and the tail node. Other nodes in a non-target forwarding path may be included between the head node and the intermediate node 1 and between the intermediate node 2 and the intermediate node 3. As shown in FIG. 3A, FIG. 3B, and FIG. 3C, this embodiment of this application includes the following steps.

S301: The head node receives to-be-forwarded data.

S302: The head node obtains a first SID list corresponding to the to-be-forwarded data, where the first SID list is generated based on SIDs of first N nodes in M nodes in the target forwarding path, N is less than M, and N is greater than or equal to 1.

S303: The head node encapsulates, in front of the to-be-forwarded data, a packet header including the first SID list, to obtain a to-be-forwarded packet.

S304: The head node sends the to-be-forwarded packet to the intermediate node 1 based on the first SID list, where the intermediate node 1 is an N^{th} node.

S305: The intermediate node 1 obtains a second SID list corresponding to the to-be-forwarded packet, where the second SID list is generated based on an (N+1)^{th} node to an (X-1)^{th} node in the M nodes.

S306: The intermediate node 1 replaces the first SID list in the packet header with the second SID list.

S307: The intermediate node 1 forwards the to-be-forwarded packet to the intermediate node 2 based on the second SID list, where the intermediate node 2 is the (X-1)^{th} node.

S308: The intermediate node 2 obtains a third SID list corresponding to the to-be-forwarded packet, where the third SID list is generated based on an X^{th} node to a Y^{th} node in the M nodes.

S309: The intermediate node 2 replaces the second SID list in the packet header with the third SID list.

S310: The intermediate node 2 forwards the to-be-forwarded packet to the intermediate node 3 based on the third SID list, where the intermediate node 3 is the Y^{th} node.

S311: The intermediate node 3 obtains a fourth SID list corresponding to the to-be-forwarded packet, where the fourth SID list is generated based on a (Y+1)^{th} node to a Z^{th} node in the M nodes.

S312: The intermediate node 3 replaces the third SID list in the packet header with the fourth SID list.

S313: The intermediate node 3 forwards the to-be-forwarded packet to the tail node based on the fourth SID list, where the tail node is the Z^{th} node.

S314: The tail node removes the packet header of the to-be-forwarded packet to obtain the to-be-forwarded data. S315: The tail node forwards the to-be-forwarded data based on a destination address of the to-be-forwarded data. Steps performed by the head node, the intermediate node, and the tail node in this embodiment of this application may be implemented according to the implementation in the embodiment shown in FIG. 2A and FIG. 2B. For details, refer to the detailed description in the embodiment shown in FIG. 2A and FIG. 2B.

According to the data transmission method shown in any one of FIG. 2A and FIG. 2B and FIG. 3A, FIG. 3B, and FIG. 3C, SIDs included in the target forwarding path can be divided into at least two parts, so that during data forwarding, a maximum quantity of SIDs supported by a device in a data transmission network can meet a requirement of a quantity of SIDs included in a packet header.

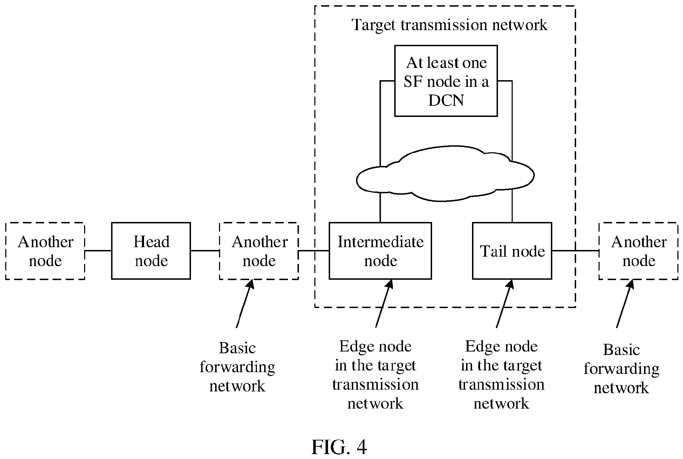

The data forwarding method provided in this application may be further applied to a network architecture. FIG. 4 is a schematic diagram 2 of a network architecture. As shown in FIG. 4, in the network architecture, the transmission network shown in FIG. 1 may include a basic transmission network and a target transmission network. In an example, the target transmission network may perform data transmission with the basic transmission network through an edge device located at an edge of the target transmission network. In another example, the target transmission network may include several target transmission subnets. An edge device in each target transmission subnet may perform data transmission through a device in the basic transmission network. When a packet is to be transmitted in the target transmission subnet, the packet needs to be transmitted to a node in the target transmission subnet via the edge device in the target transmission subnet. Therefore, the edge device may also become a gateway device of each target transmission subnet. In this application, when being transmitted in the target transmission network, a packet needs to be transmitted along a preset forwarding path.

In an actual application, the target transmission network in FIG. 4 may be a data center network (Data Center Network, DCN). In an example application, the DCN may be used to carry various service units in a telco cloud network. It should be noted that the telco cloud network may also be referred to as a telco cloud, and is a network based on an NFV technical architecture. An NFV technology is proposed to resolve problems such as numerous telecom network hardware, complex deployment and operation and maintenance, and difficult service innovation. The NFV technology aims to plan and construct a network architecture based on a distributed cloud data center. NFV and SDN technologies are used to implement layered decoupling of software and hardware, function virtualization, automatic deployment, and flexible resource scheduling. The telco cloud network is an NFV network constructed based on the foregoing ideas. In another example application, the basic transmission network may include a metropolitan (Metro) network and a backbone (Core) network. The metro network and the core network each may include one or more types of routing devices, such as a customer edge (Custom Edge, CE) device, a provider edge (Provider Edge, PE) device, and a provider router/backbone router (Provider Router, P device for short).

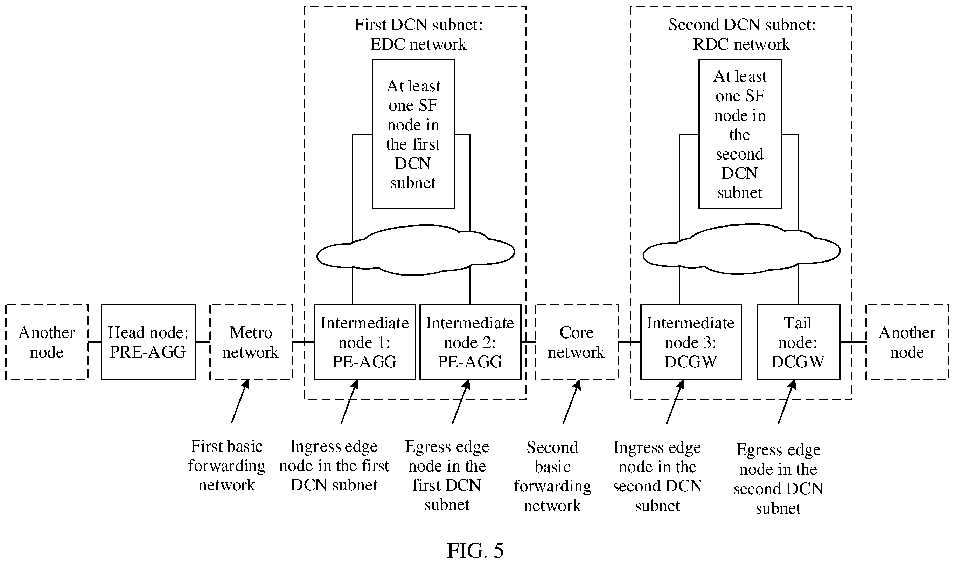

FIG. 5 is a schematic diagram 3 of a network architecture. As shown in FIG. 5, a DCN may use a multi-level hierarchical architecture. For example, the DCN may include: an access data center (Access Data Center, ADC) network, an edge data center (Edge Data Center, EDC) network, a regional data center (Region Data Center, RDC) network, a central data center (Central Data Center, CDC) network, and a DCN controller (DCN Controller). The ADC network, the EDC network, the RDC network, and the CDC network are a plurality of DCN subnets in the DCN. The ADC network may include a level-2 aggregation device, where the level-2 aggregation device may be referred to as a prefix aggregation (prefix aggregation, PRE-AGG) device. The EDC network may include a level-1 aggregation device located at an edge of the EDC network, several virtual network function (Virtual Network Function, VNF) nodes, and several topology nodes, where the level-1 aggregation device may be referred to as a PE aggregation (PE aggregation, PE-AGG) device. In comparison with the level-2 aggregation device, the level-1 aggregation device is usually used to connect to a higher-level basic forwarding network. The RDC network may include a data center gateway (Data Center Gateway, DCGW) located at an edge of the RDC network, several VNF nodes, and several topology nodes. For example, the VNF node in the EDC network may be a VNF node such as a vIPS or a vFW, the VNF node in the RDC network may include a wide area network optimization controller (WAN Optimization Controller, vWOC), and the topology nodes in the EDC network and the RDC network may be leaf (leaf) nodes, spine (spine) nodes, or virtual switch (vSwitch) nodes. In addition, in an example, the EDC network and the RDC network may be connected to each other through a PE device. In an example, the DCGW device and the PE device may be integrated or separated.

The DCN controller may be configured to perform unified planning and management on the DCN.

In the network architecture shown in FIG. 5, an optical line terminal (optical line terminal, OLT) is an access network device, the OLT may be an initiator of a service flow in a telco cloud, and the service flow aims to access a remote network. For example, the remote network may be the internet (Internet). The internet may be connected to a basic transmission network or an edge node in the DCN through an internet gateway (Internet GateWay, IGW).

Based on the network architecture shown in FIG. 5, before the service flow arrives at the remote network, the service flow needs to sequentially pass through several VNF nodes in a plurality of DCN subnets based on a service attribute of the service flow, to implement access control, for example, a control requirement such as authentication and charging, on the service flow in a telecom network. A list of VNF nodes through which the service flow needs to pass in the DCN may be referred to as a service function chain (Service Function Chain, SFC). With increasingly high degree of SDN and NFV in a telecom network, SFCs through which various service flows need to pass under different conditions need to be flexibly configured and managed, and therefore, flexible SFC orchestration gradually becomes one of key technologies of the telco cloud. An NFV network architecture may include an SF node, an SFF node, a classification node, and an agent node. For example, the IETF SFC WG defines an SFC architecture (RFC7498/RFC7665) and an NSH-based implementation solution (RFC8300).

It should be noted that, a difference from the metro network and the core network lies in that, the DCN is usually considered as a private network of an enterprise. In particular, an underlay network (Underlay Network) in the DCN is usually not expected to be directly exposed to the metro network and the core network. Therefore, in addition to controlling a service flow to be forwarded based on a configured SFC, a privacy requirement imposed by data forwarding also needs to be considered during SFC implementation. The privacy requirement may be summarized as the following constraint: An internal topology of a DCN and a SID of an SF node cannot be exposed to a basic forwarding network.

In addition, when the data forwarding methods shown in FIG. 2A and FIG. 2B and FIG. 3A, FIG. 3B, and FIG. 3C are applied to the DCN shown in FIG. 4 and FIG. 5 and the telco cloud network deployed based on the DCN, an expansion requirement imposed by data forwarding on a network architecture also needs to be met. The expansion requirement of the network architecture may be summarized as the following constraints: A data forwarding method needs to support any quantity of hierarchical DCNs, and a length of a SID list cannot exceed a maximum SID length supported by a device in a data transmission network.

It can be learned from the data forwarding methods shown in FIG. 2A and FIG. 2B and FIG. 3A, FIG. 3B, and FIG. 3C that, the data forwarding method provided in this application can meet the constraint that the length of the SID list does not exceed the maximum SID length supported by the device. To meet the constraint of the privacy requirement, this application provides the following data forwarding method. A first SID list added by a head node includes only a SID of an edge node in a DCN, but does not include a SID of an internal node in the DCN.

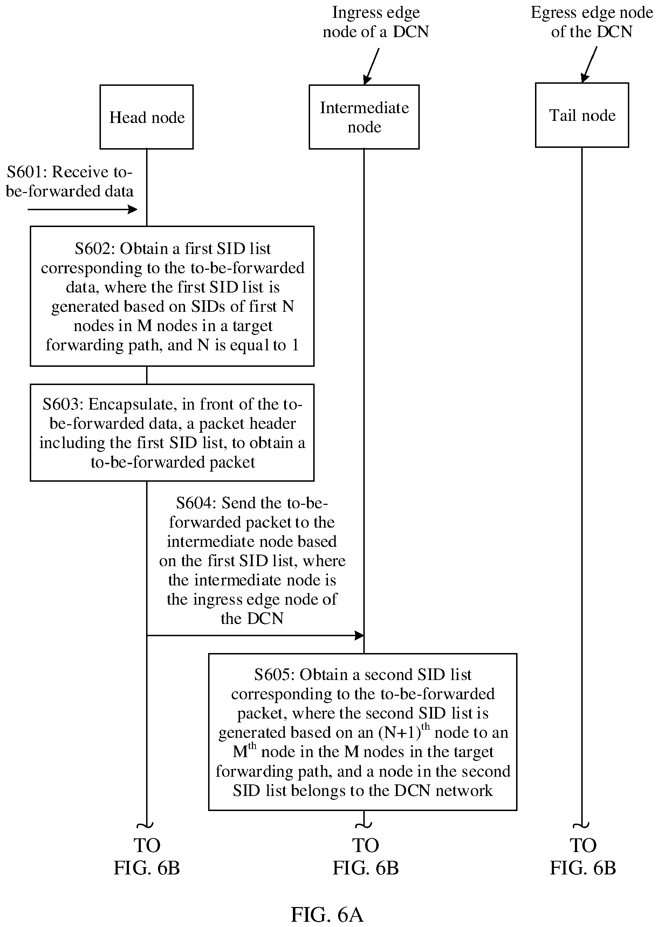

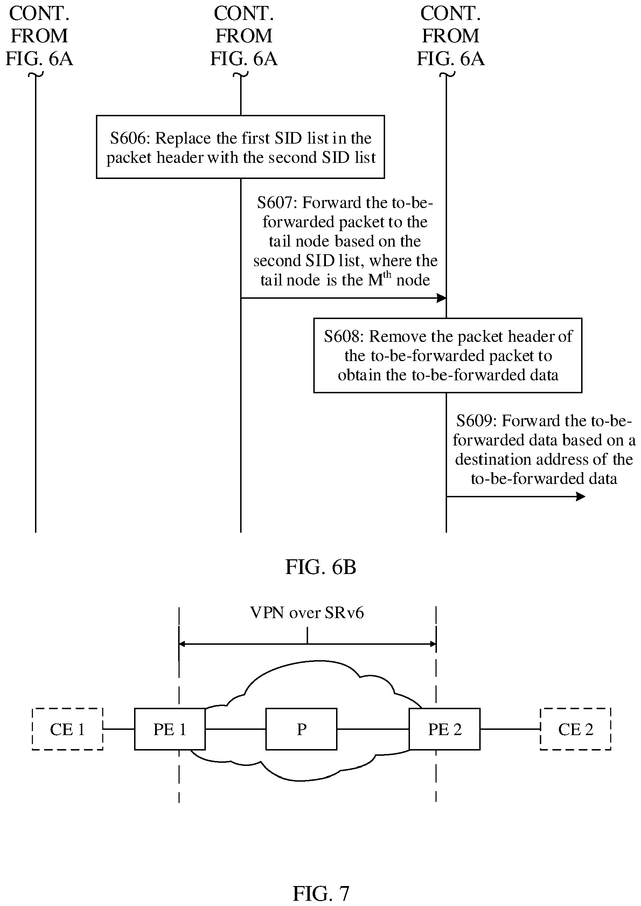

FIG. 6A and FIG. 6B are a schematic diagram 3 of an interaction procedure of a data forwarding method according to an embodiment of this application. This embodiment of this application relates to a head node, an intermediate node, and a tail node. For example, the intermediate node may be an ingress edge node in a DCN, and the tail node may be an egress edge node in the DCN. An internal node in the DCN may be further included between the intermediate node and the tail node. In an example, the ingress edge node and the egress edge node in this embodiment of this application may be a same node device, and the node device may be referred to as an edge node in the DCN. It should be noted that a SID of the edge node when the edge node is used as the ingress edge node and a SID of the edge node when the edge node is used as the egress edge node are respectively a SID 1 and a SID 2.

In some scenarios of this application, the head node may be connected to the ingress edge node in the DCN through a basic forwarding network.

As shown in FIG. 6A and FIG. 6B, this embodiment of this application may include the following steps.

S601: The head node receives to-be-forwarded data.

The head node may be a PRE-AGG. In another embodiment of this application, the head node may alternatively be a

PE-AGG.

S602: The head node obtains a first SID list corresponding to the to-be-forwarded data, where the first SID list is generated based on SIDs of first N nodes in M nodes in a target forwarding path, and N is equal to 1.

The head node may obtain, based on a service attribute of the to-be-forwarded data, an SR policy 1 corresponding to the to-be-forwarded data; and determine a SID list included in the SR policy 1 as the first SID list corresponding to the to-be-forwarded data.

S603: The head node encapsulates, in front of the to-be-forwarded data, a packet header including the first SID list, to obtain a to-be-forwarded packet.

S604: The head node sends the to-be-forwarded packet to the intermediate node based on the first SID list, where the intermediate node is the ingress edge node in the DCN.

For example, the ingress edge node in the DCN may be a PRE-AGG or a DCGW.

S605: The intermediate node obtains a second SID list corresponding to the to-be-forwarded packet, where the second SID list is generated based on an (N+1)^{th} node to an M^{th} node in the M nodes in the target forwarding path, and a node in the second SID list belongs to the DCN.

When an active SID in the first SID list is a SID of the intermediate node, the intermediate node may obtain a function matching the active SID, where the function is used to instruct the intermediate node to replace the first SID list in the to-be-forwarded packet with a second SID list included in an SR policy 2; and the intermediate node determines the second SID list included in the SR policy 2 corresponding to the function as the second SID list corresponding to the to-be-forwarded packet.

S606: The intermediate node replaces the first SID list in the packet header with the second SID list.

S607: The intermediate node forwards the to-be-forwarded packet to the tail node based on the second SID list, where the tail node is the M^{th} node.

The intermediate node forwards the packet in a node list indicated by a destination address in the packet header, and finally forwards the packet to the tail node.

S608: The tail node removes the packet header of the to-be-forwarded packet to obtain the to-be-forwarded data.

S609: The tail node forwards the to-be-forwarded data based on a destination address of the to-be-forwarded data.

The DCN may further include a first DCN subnet and a second DCN subnet. The first DCN subnet may include an ingress edge node and an egress edge node in the first DCN subnet, and at least one SF node in the first DCN subnet. The second DCN subnet may include an ingress edge node and an egress edge node in the second DCN subnet, and at least one SF node in the second DCN subnet.

For example, a data forwarding process in a hierarchical DCN is similar to an interaction process in the data forwarding method shown in FIG. 3A, FIG. 3B, and FIG. 3C. For example, in the method shown in FIG. 3A, FIG. 3B, and FIG. 3C, the intermediate node 1 may be the ingress edge node in the first DCN subnet, the intermediate node 2 may be the egress edge node in the first DCN subnet, the intermediate node 3 may be the ingress edge node in the second DCN subnet, and the tail node may be the egress edge node in the second DCN subnet.

It should be noted that a SID list 1 that corresponds to the SR policy 1 and that matches the head node includes only a SID of the ingress edge node in the first DCN subnet, and the ingress edge node may be a first node that is in the target forwarding path and that belongs to the first DCN subnet. A SID list 2 that corresponds to the SR policy 2 and that matches the ingress edge node (that is, the intermediate node) of the first DCN subnet includes a SID of an internal node (that is, an SF node in the target forwarding path) of the first DCN subnet and a SID of the egress edge node (that is, the intermediate node) of the first DCN subnet. A SID list 3 that corresponds to an SR policy 3 and that matches the egress edge node (that is, the intermediate node) of the first DCN subnet includes a SID of the tail node or a SID of the ingress edge node (that is, the intermediate node) of the second DCN subnet. This manner can ensure that a SID of an internal node in each hierarchical DCN subnet is not exposed to the basic forwarding network, thereby meeting a privacy requirement imposed by data forwarding when an SRv6 technology is applied to a DCN and a telco cloud network.

Steps performed by the head node, the intermediate node 1, the intermediate node 2, the intermediate node 3, and the tail node in this embodiment of this application may be implemented according to the implementation in the embodiment shown in FIG. 2A and FIG. 2B. For details, refer to the detailed description in the embodiment shown in FIG. 2A and FIG. 2B. For other details and technical effects of the technical solution in this embodiment of this application, refer to descriptions in the foregoing embodiments of this application. Details are not described herein again.

Based on the foregoing data forwarding method, this application further provides a data forwarding method, where the method may be applied to a scenario in which an SRv6 tunnel carries a VPN service.

FIG. 7 is a schematic diagram of a network architecture. As shown in FIG. 7, a VPN service is usually used to control data to be transmitted between designated devices in a data transmission network, for example, between a PE 1 and a PE 2 (that is, a target PE of the VPN service). The PE 1 receives to-be-forwarded data from a CE 1. After the to-be-forwarded data passes through an SRv6 tunnel (VPN over SRv6) that supports the VPN service and that is between the PE 1 and the PE 2, the PE 2 sends the to-be-forwarded data to a CE 2. A P device may further be included between the PEs. In this case, a SID of the target PE corresponding to the VPN service may be used as a SID of the VPN service. In a control manner, when the to-be-forwarded data enters the SRv6 tunnel, a head node determines that the to-be-forwarded data needs to be transmitted to a target node specified by the VPN service. In this case, a SID list added by the head node to a packet header includes a SID of a complete target forwarding path and the SID of the VPN service. The SID of the VPN service is a last SID in the SID list. When a tail node removes the packet header, the packet header includes the SID of the complete target forwarding path and the SID of the VPN service. In this control manner, an SRv6 technology allows the SID list in the packet header to be replaced on only one node, but does not allow a part of SIDs in the SID list in the packet header to be replaced. For example, if a node list corresponding to the SRv6 tunnel is ABCD, and the SID of the destination node of the VPN service is E, in an example, the SID list added by the head node may be ABCDE, that is, all SIDs of SRv6 tunnel nodes and the SID of the VPN service. In some scenarios, only the SID list is allowed to be replaced as a whole. For example, ABE is replaced with CDE as a whole, but AB in ABE is not allowed to be replaced with CD. Therefore, when the last SID in the SID list added by the head node is the SID of the VPN service, for example, E in ABCDE, if the SID list added by the head node is a segmented SID list, for example, ABE, an intermediate node is not allowed to replace the SID list with CDE as a whole. Therefore, if the SRv6 tunnel is used to carry a VPN service, the data forwarding method relating to path segment delivery in the foregoing embodiment cannot be used.

To resolve the foregoing problem, according to the data forwarding method provided in this application, the packet header added by the head node in front of the to-be-forwarded data is divided into two parts: an inner packet header and an outer packet header. The inner packet header may be used to carry a SID of a VPN service, and may be referred to as a service header. The outer packet header may be used to carry a SID list related to a target forwarding path, and may be referred to as a transport header. When replacing the SID list, the intermediate node only needs to replace the SID list included in the outer packet header. When removing the packet header, the tail node may remove the outer packet header and the inner packet header. In this way, a data forwarding scenario in which an SRv6 tunnel carries a VPN service can be supported on the basis of path segment delivery.

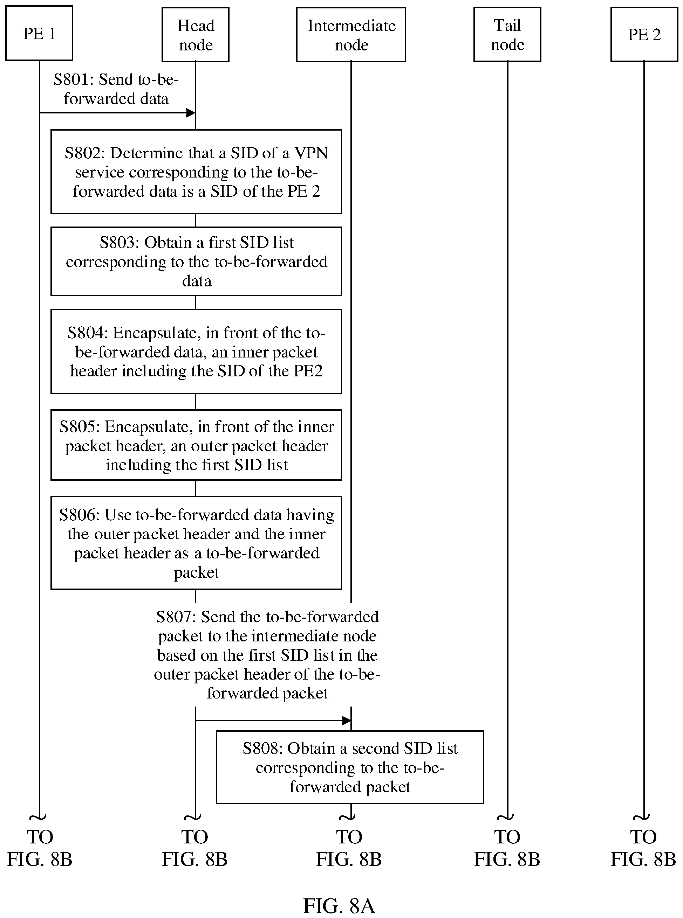

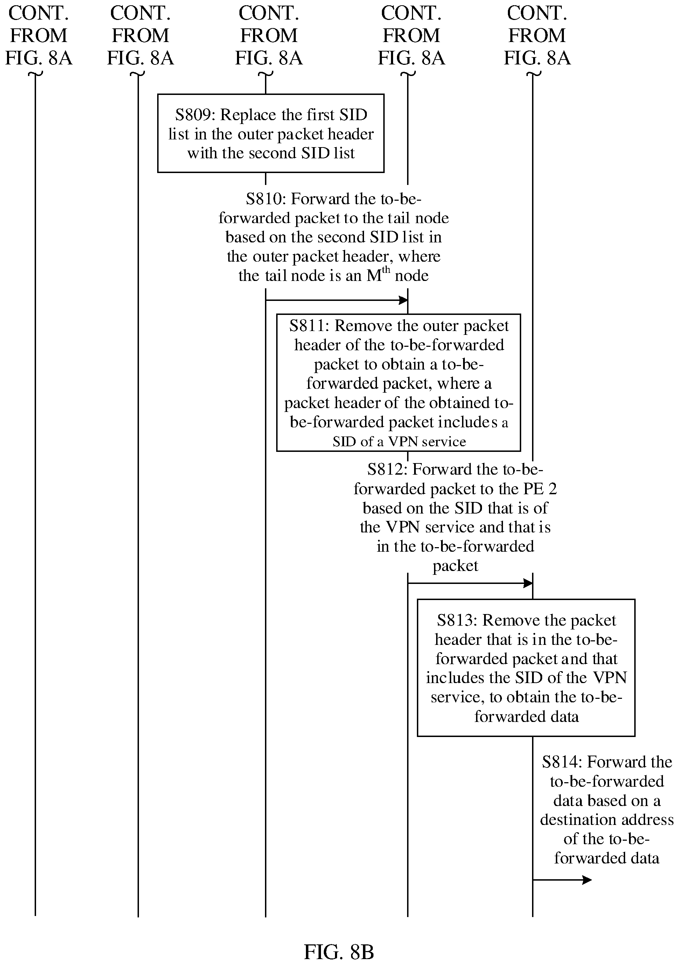

FIG. 8A and FIG. 8B are a schematic diagram 4 of an interaction procedure of a data forwarding method according to an embodiment of this application. This embodiment of this application relates to a start node of a VPN service, a head node, an intermediate node, a tail node, and a target node of the VPN service. In an example of this application, the head node may be connected to the start node of the VPN service, and the tail node may be connected to the target node of the VPN service. When an interface for receiving to-be-forwarded data is a preset interface of the VPN service, the tail node may determine that the to-be-forwarded data needs to be forwarded through the SRv6 tunnel to the target node of the VPN service. The following uses an example in which a PE 1 and a PE 2 are respectively used as the start node and the target node of the VPN service for description. As shown in FIG. 8A and FIG. 8B, this embodiment of this application may include the following steps.

S801: The PE 1 sends to-be-forwarded data to the head node.

For example, the to-be-forwarded data is an Ethernet frame.

S802: The head node determines that a SID of a VPN service corresponding to the to-be-forwarded data is a SID of the PE 2.

The head node may determine, based on an ingress port that receives the to-be-forwarded data, whether to transmit the to-be-forwarded data based on the VPN service, and the head node may obtain the SID of the VPN service from a controller in advance.

S803: The head node obtains a first SID list corresponding to the to-be-forwarded data.

The first SID list is generated based on first N nodes in M nodes in a target forwarding path.

S804: The head node encapsulates, in front of the to-be-forwarded data, an inner packet header including the SID of the PE 2.

The SID of the PE 2 may be located in a destination address or an SRH field in the inner packet header.

S805: The head node encapsulates, in front of the inner packet header, an outer packet header including the first SID list.

S806: The head node uses to-be-forwarded data having the outer packet header and the inner packet header as a to-be-forwarded packet.

Table 3 schematically shows the to-be-forwarded packet obtained by adding the outer packet header and the inner packet header.

**Table 3**

| To-be-forwarded packet | | |
|---|---|---|
| Added outer packet header | Added inner packet header | To-be-forwarded data |

S807: Send the to-be-forwarded packet to the intermediate node based on the first SID list in the outer packet header of the to-be-forwarded packet.

S808: The intermediate node obtains a second SID list corresponding to the to-be-forwarded packet.

The second SID list is generated based on an (N+1)^{th} node to an M^{th} node in the M nodes in the target forwarding path. S809: The intermediate node replaces the first SID list in the outer packet header with the second SID list.

S810: The intermediate node forwards the to-be-forwarded packet to the tail node based on the second SID list in the outer packet header, where the tail node is the M^{th} node.

Steps S808 to S810 are similar to steps S205 to S207.

S811: The tail node removes the outer packet header of the to-be-forwarded packet to obtain a to-be-forwarded packet, where a packet header of the obtained to-be-forwarded packet includes the SID of the VPN service.

S812: The tail node forwards the to-be-forwarded packet to the PE 2 based on the SID that is of the VPN service and that is in the to-be-forwarded packet.

S813: The PE 2 removes the packet header that is in the to-be-forwarded packet and that includes the SID of the VPN service, to obtain the to-be-forwarded data.

S814: The PE 2 forwards the to-be-forwarded data based on a destination address of the to-be-forwarded data.

The tail node may alternatively remove the outer packet header and the inner packet header, and send, to the PE 2, the to-be-forwarded data obtained by removing the outer packet header and the inner packet header.

There may be a plurality of intermediate nodes, or the intermediate nodes may be edge nodes in a plurality of DCN subnets.

A pre-planned target forwarding path may alternatively include the target node of the VPN service. For example, a SID of an M^{th} node in the target forwarding path may be the SID of the VPN service. In this case, the second SID list may be generated based on an (N+1)^{th} node to a Z^{th} node in the M nodes in the target forwarding path, where Z may be equal to M-1.

Steps performed by the head node, the intermediate node, and the tail node in this embodiment of this application may be implemented according to the implementation in the embodiment shown in FIG. 2A and FIG. 2B. For details, refer to the detailed description in the foregoing embodiment. For other details and technical effects of the technical solution in this embodiment of this application, refer to descriptions in the foregoing embodiments of this application. Details are not described herein again.

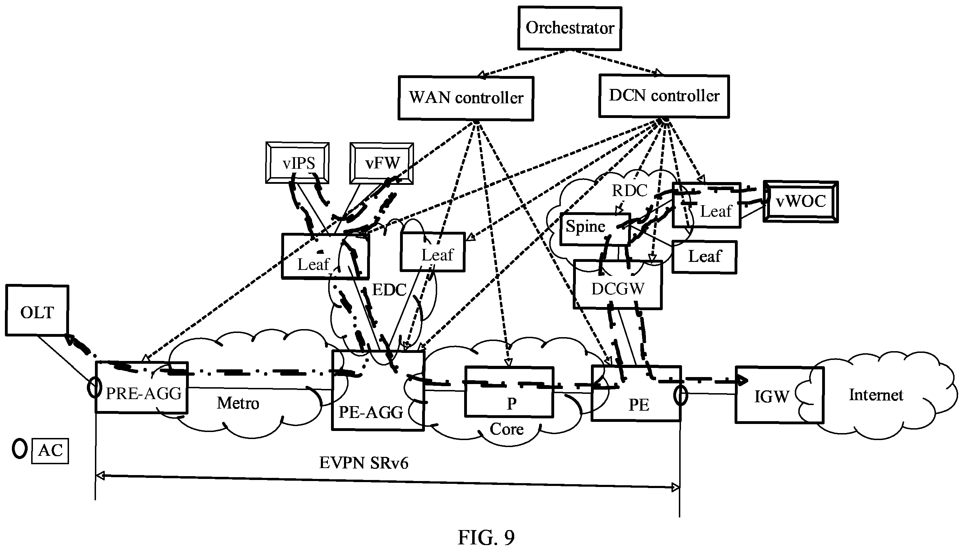

The following describes the data forwarding method provided in this application by using an example in a scenario in which service flow control of a VPN service is supported in a telco cloud network deployed in a hierarchical DCN. FIG. 9 is a schematic diagram of a network architecture in which a data forwarding method is applied to a service scenario.

FIG. 9 schematically shows a flow direction of to-be-forwarded data that is forwarded based on a preset forwarding path of a service chain. To-be-forwarded data sent by an OLT device to a PRE-AGG may be used to request the internet. A P device and a PE in a metro or core (core) network are devices in a basic forwarding network. The PRE-AGG is a device in a first-level DCN. Leaf nodes in an EDC network and a PE-AGG are devices in a second-level DCN. A spine node and leaf nodes in an RDC network and a DCGW are devices in a third-level DCN. The DCGW and the PE adjacent to the DCGW may be an integrated device or separated devices.

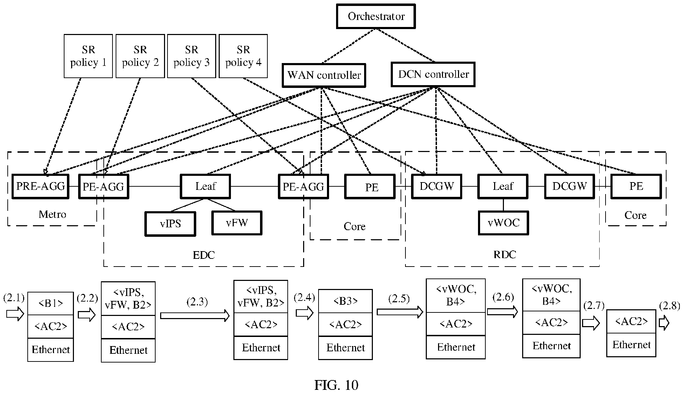

FIG. 10 is a schematic diagram of an overall framework of a processing procedure in which a data forwarding method is applied to a service scenario. FIG. 10 shows a processing process of adding a packet header, replacing a SID list in the packet header, and removing the packet header in a process of forwarding to-be-forwarded data.

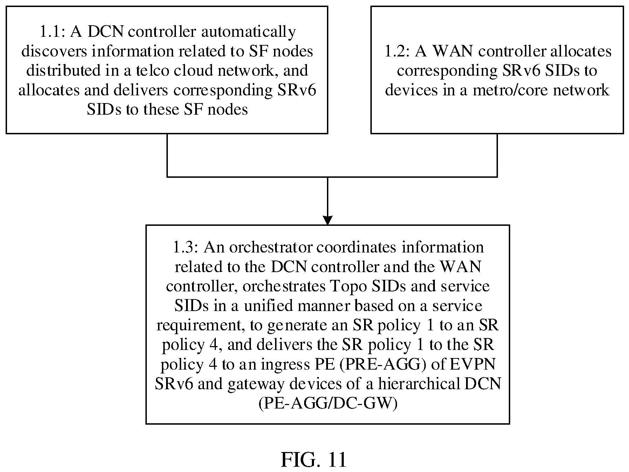

FIG. 11 is a diagram 1 of a processing procedure in which a data forwarding method is applied to a service scenario.

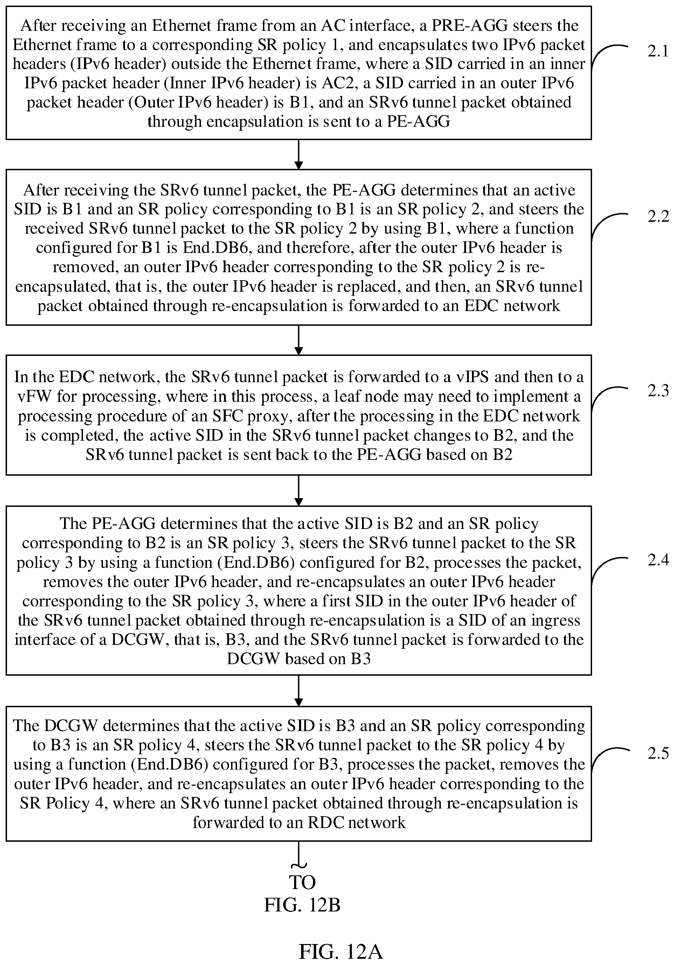

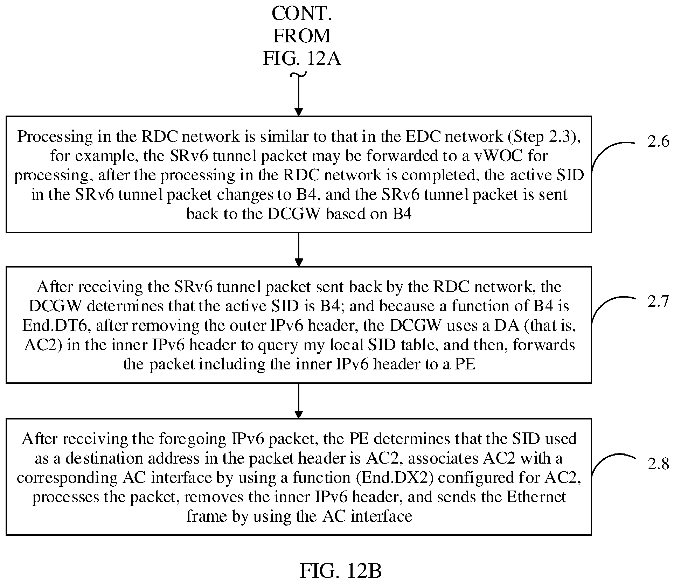

FIG. 12A and FIG. 12B are a diagram 2 of a processing procedure in which a data forwarding method is applied to a service scenario.

The following provides detailed descriptions with reference to FIG. 9 and FIG. 10.

Based on the network architecture shown in FIG. 9, this application provides a data transmission method. Before an interaction procedure shown in FIG. 12A and FIG. 12B is performed, the following control procedure shown in FIG. 11 may be further performed in advance.

Step 1.1: A DCN controller automatically discovers information related to SF nodes distributed in a telco cloud network, and allocates and delivers corresponding SRv6 SIDs to these SF nodes.

The SF node deployed in the telco cloud network may notify the DCN controller of identification information of the SF node in a broadcast manner, and request the DCN controller to allocate a SID to the SF node.

Step 1.2: A WAN controller allocates corresponding SRv6 SIDs to devices in a metro network and a core network. The WAN controller may be a controller in a basic forwarding network. For example, a device in the basic forwarding network may send device identification information of the device to the WAN controller, and request the WAN controller to allocate a SID to the device.

Step 1.3: An orchestrator (Orchestrator) coordinates information related to the DCN controller and the WAN controller, orchestrates Topology SIDs and service SIDs in a unified manner based on a service requirement, to generate several SR policies, and delivers the SR policies to an ingress PE (PRE-AGG) of EVPN SRv6 and gateway devices of a hierarchical DC (PE-AGG/DC-GW).

It should be noted that, when the DCN controller coordinates with the WAN controller, the DCN controller may determine, based on a case in which a DCN subnet is isolated by a plurality of basic forwarding subnets of the basic forwarding network, a segment forwarding path that is obtained through division and that corresponds to a target forwarding path.

For example, the orchestrator may first plan service chains based on various services in a telco cloud network, that is, lists of SIDs of SF nodes through which various types of to-be-forwarded data need to pass in a DCN. These service chains may be considered as target forwarding paths corresponding to SRv6 tunnels. Then, the orchestrator segments, by using a quantity of levels of the hierarchical DCN as a quantity of segments into which a SID list that needs to be segmented and that corresponds to the target forwarding path, using an ingress edge node in each-level DCN as a last node of each segment, and using a tail node as a last node of a last segment, the SID list corresponding to the target forwarding path. For example, three levels may correspond to three segments.

In addition, the orchestrator separately notifies a SID of a VPN service to the PRE-AGG (which may be considered as a head node).

Then, the WAN controller and the DCN controller may deliver an allocated SID and a SID list that is obtained through segmentation.

After the foregoing control procedure is performed, a SID of each node has been allocated and delivered, and an SR policy on each BSID node also has been delivered.

For example, Table 4 schematically shows planning of a SID of each node on an SRv6 tunnel.

**Table 4**

| Name of a node device in a data transmission network | SID identifier of the node device | SID type corresponding to the SID identifier of the node device | Operation instruction (operation) corresponding to the SID identifier | Device description | SR policy corresponding to the SID identifier of the node device |
|---|---|---|---|---|---|
| PRE-AGG | AC1 | Node type SID (Node SID) | End.DX2 | It is used to identify an AC interface of the PRE-AGG and implement a VPWS service. | SR policy 1 |
| PE-AGG | B1 | SID of a BSID node (BSID) | End.DB6 | It is used to be associated with a transport header Transport header in an EDC network and implement an SFC function in the EDC network. End.DB6 is an SRv6 function newly defined in this application. | SR policy 2 |
| | B2 | BSID | End.DB6 | It is used to be associated with a transport header used to transmit an SRv6 packet from a PE-AGG to a DCGW. | SR policy 3 |
| DCGW | B3 | BSID | End.DB6 | It is used to be associated with a transport header in an RDC network and implement an SFC function in the RDC network. | SR policy 4 |
| | B4 | BSID | End.DT6 | It is used to remove the transport header and sends a service header and a packet located after the service header to a PE. | |
| Leaf (EDC) | vIPS | Node SID | End | It is used to be associated with a vIPS and implement an IPS (Intrusion Prevention System) function in the EDC network. Note: If the vIPS is SR-aware, the vIPS may alternatively allocate and distribute the SID directly. | |
| | vFW | Node SID | End | It is used to be associated with a vFW and implement an FW (Firewall) function in the EDC network. | |
| Leaf (RDC) | vWOC | Node SID | End | It is used to be associated with a vWOC and implement a WOC (WAN Optimization Controller) function in the RDC network. | |
| PE | AC2 | Node SID | End.DX2 | It is used to identify an AC interface of the PE and implement the VPWS service. | |

Table 4 shows a name of each node device in the data transmission network, a SID identifier corresponding to the node device, a SID type corresponding to the SID identifier of the node device, an operation instruction corresponding to the SID identifier, a device description, and an SR policy corresponding to the SID identifier of the node device.

SID types corresponding to SID identifiers of the PRE-AGG, the PE-AGG, and the DCGW all correspond to a device whose SID type is a BSID node (BSID node) type. Leaf (EDC) and Leaf (RDC) respectively represent a leaf (leaf) node located in the EDC network and a leaf node located in the RDC network. Leaf (EDC network) represents a node device on which an SF is deployed and that is in the EDC network. For example, two SFs such as a vIPS and a vFW are deployed on the leaf, and SIDs of the SFs are represented by the vIPS and the vFW. AC1 represents a SID of an ingress interface on the PRE-AGG, and AC2 represents a SID of an egress interface on a PE connected to an IGW.

Referring to FIG. 10, a PRE-AGG may be used as a head node, a PE-AGG may be used as an intermediate node, and a DCGW may be used as an intermediate node and a tail node. A SID of the PRE-AGG is AC1. When a PE 1 sends an Ethernet frame in a service flow to an AC1 interface of the PRE-AGG, the PRE-AGG determines, based on the AC1, that the Ethernet frame needs to match a VPN service, and may obtain a SID corresponding to the VPN service, for example, AC2. In addition, a corresponding function and a corresponding SR policy may be obtained based on a service attribute of the service flow, to process a packet. The PE-AGG has two SIDs such as B1 and B2. When the packet is forwarded to B1 (that is, an active SID in the packet is B1), the PE-AGG processes the packet according to an SR policy corresponding to B1. When the packet is forwarded to B2 (that is, an active SID in the packet is B2), the PE-AGG processes the packet according to an SR policy corresponding to B2. Similarly, the DCGW has two SIDs such as B3 and B4. When the packet is forwarded to B3 (that is, an active SID in the packet is B3), the DCGW processes the packet according to an SR policy corresponding to B3. When the packet is forwarded to B4 (that is, an active SID in the packet is B4), the DCGW processes the packet according to an SR policy corresponding to B4.

In this application, a SID in each DCN subnet is allowed to be advertised only to a device in the DCN subnet and an edge device in the DCN subnet or a gateway device in the DCN subnet. For an EDC network, the PE-AGG is an edge device of the EDC network, and a vIPS and a vFW are SIDs of SFs deployed on a leaf node in the EDC network. Because the PE-AGG learns an internal topology structure of the EDC network, the PE-AGG may control, based on a SID that is of each SF and that is carried in a packet, the packet to successively pass through SFs in SFCs based on the SFCs indicated by a SID list in a packet header. Similarly, for an RDC network, the DCGW is a gateway device of the RDC network, and a vWOC is a SID of an SF deployed on a leaf node in the RDC network. Because the DCGW learns an internal topology structure of the RDC network, the DCGW may control, based on a SID that is of each SF and that is carried in a packet, the packet to successively pass through SFs in SFCs based on the SFCs indicated by a SID list in a packet header. The DCN subnet may alternatively be a DCN subnet applied to another service other than a telco cloud, and the vIPS, the vFW, and the vWOC may alternatively be SFs that need to be accessed by another service in a telco cloud network.

It should be noted that the foregoing SIDs are planned for an EVPN SRv6 VPWS service. If other types of services, such as BGP SRv6 L3VPN, EVPN SRv6 VPLS, and EVPN SRv6 L3VPN, need to be deployed in an SRv6 tunnel manner, differentiated planning needs to be performed for SIDs on a PRE-AGG (an ingress PE of a VPN service) and a PE (an egress PE of the VPN service). In an example, SIDs of a head node and a tail node in a target forwarding path may be planned based on a requirement of another service type. The technical solutions of this application are mainly designed for processing on a hierarchical DC gateway (a PE-AGG and a DCGW) in an edge device or a gateway device in a DCN subnet. Therefore, for a type of a service carried on an SRv6 tunnel, there is no difference in implementing the method provided in this embodiment of this application by an intermediate node.

An SR policy corresponding to each SID may be preconfigured. An SR policy corresponding to AC1 may be an SR policy 1, an SR policy corresponding to B1 may be an SR policy 2, an SR policy corresponding to B2 may be an SR policy 3, and an SR policy corresponding to B3 may be an SR policy 4.

Table 5 shows an example of the SR policies. Table 5 shows the SR policy 1 to the SR policy 4.

**Table 5**

| SR policy | SID list | SID list usage |
|---|---|---|
| SR policy 1 | <B1> | It is used to be added to a SID list in an outer packet header. |
| SR policy 2 | <vIPS, vFW, B2> | It is used to replace the SID list in the outer packet header when an active SID in the outer packet header is a SID of a current node. |
| SR policy 3 | <B3> | It is used to replace the SID list in the outer packet header when an active SID in the outer packet header is a SID of a current node. |
| SR policy 4 | <vWOC, B4> | It is used to replace the SID list in the outer packet header when an active SID in the outer packet header is a SID of a current node. |

In this application, the outer packet header may be referred to as a transport header (Transport header), and an inner packet header may be referred to as a service header (Service header).

As shown in FIG. 12A and FIG. 12B, a processing procedure of a data forwarding method includes the following steps.

Step 2.1: After receiving an Ethernet frame from an AC interface, a PRE-AGG steers the Ethernet frame to a corresponding SR policy 1, and encapsulates two IPv6 headers (IPv6 header) outside the Ethernet frame. A SID carried in an inner IPv6 header (Inner IPv6 header) is AC2, and a SID carried in an outer IPv6 header (Outer IPv6 header) is B1. An SRv6 tunnel packet obtained through encapsulation is sent to a PE-AGG.

The PRE-AGG determines, based on a case in which a requested service in the Ethernet frame is to access the internet, that an SR policy corresponding to a service attribute of the Ethernet frame is an SR policy 1, and obtains a SID list of a first segment, that is, B1. In addition, the PRE-AGG determines, according to an instruction of a DCN controller or based on a VPN service configuration of the PRE-AGG, to implement a VPWS in a manner of an SRv6-based EVPN service, and obtains a SID of a destination node of a VPN service, that is AC2, to be specific, a SID of an egress port of a PE. In an example, when an ingress port of the received Ethernet frame is AC1, the PRE-AGG may determine that a to-be-forwarded packet needs to be forwarded in a manner of the VPN service and determine the SID of the destination node corresponding to the VPN service.

Step 2.2: After receiving the SRv6 tunnel packet, the PE-AGG determines that an active SID is B1 and an SR policy corresponding to B1 is an SR policy 2, and steers the received SRv6 tunnel packet to the SR policy 2 by using B1. A function configured for B1 is End.DB6. Therefore, after the outer IPv6 header is removed, an outer IPv6 header corresponding to the SR policy 2 is re-encapsulated, that is, the outer IPv6 header is replaced. Then, an SRv6 tunnel packet obtained through re-encapsulation is forwarded to an EDC network.

Step 2.3: In the EDC network, the SRv6 tunnel packet is forwarded to a vIPS and then to a vFW for processing. In this process, a leaf node may need to implement a processing procedure of an SFC proxy. After the processing in the EDC network is completed, the active SID in the SRv6 tunnel packet changes to B2, and the SRv6 tunnel packet is sent back to the PE-AGG based on B2.

Step 2.4: The PE-AGG determines that the active SID is B2 and an SR policy corresponding to B2 is an SR policy 3, steers the SRv6 tunnel packet to the SR policy 3 by using a function (End.DB6) configured for B2, processes the packet, removes the outer IPv6 header, and re-encapsulates an outer IPv6 header corresponding to the SR policy 3. Then, a first SID in the outer IPv6 header of the SRv6 tunnel packet obtained through re-encapsulation is a SID of an ingress interface of a DCGW, that is, B3. The SRv6 tunnel packet is forwarded to the DCGW based on B3.

Step 2.5: The DCGW determines that the active SID is B3 and an SR policy corresponding to B3 is an SR policy 4, steers the SRv6 tunnel packet to the SR policy 4 by using a function (End.DB6) configured for B3, processes the packet, removes the outer IPv6 header, and re-encapsulates an outer IPv6 header corresponding to the SR Policy 4. Then, an SRv6 tunnel packet obtained through re-encapsulation is forwarded to an RDC network.

Step 2.6: Processing in the RDC network is similar to that in the EDC network (Step 2.3). For example, the SRv6 tunnel packet may be forwarded to a vWOC for processing. After the processing in the RDC network is completed, the active SID in the SRv6 tunnel packet changes to B4, and the SRv6 tunnel packet is sent back to the DCGW based on B4.

Step 2.7: After receiving the SRv6 tunnel packet sent back by the RDC network, the DCGW determines that the active SID is B4; and because a function of B4 is End.DT6, after removing the outer IPv6 header, the DCGW uses a DA (that is, AC2) in the inner IPv6 header to query my local SID table, and then, forwards the packet including the inner IPv6 header to the PE.

Step 2.8: After receiving the foregoing IPv6 packet, the PE determines that the SID used as a destination address in the packet header is AC2, associates AC2 with a corresponding AC interface by using a function (End.DX2) configured for AC2, processes the packet, removes the inner IPv6 header, and sends the Ethernet frame by using the AC interface.

For technical details of step 2.2 to step 2.8 refer to descriptions in the foregoing embodiments of this application.

It can be learned that, when the method is applied to an SRv6-based L2VPN/L3VPN. two IPv6 headers (which may or may not carry an SRH) are encapsulated in front of a service packet (Ethernet/IPv4/IPv6), so that a transport layer is separated from a service layer, thereby reducing a requirement for an SRv6 MSD.

A new SRv6 function (End.DB6) is defined in this application, and the function is deployed on a gateway device of a hierarchical DC (ADC/EDC/RDC/CDC). With reference to an SR BSID mechanism, topology information and service information in the hierarchical DC are shielded externally (Metro/Core Network). In this way, an SRv6 SFC is effectively implemented.

In addition, because the constraint condition can be met, the method can be efficiently applied to an SR SFC scenario of a telco cloud. In addition, only an ingress PE (the PRE-AGG) and a gateway device (the PE-AGG/DCGW) in the hierarchical DC need to be slightly modified. Therefore, the implementation is simple. An SDN controller can be used to automatically generate and deliver an SR policy. This facilitates deployment. In addition, the foregoing solution supports both an SR shortest path (Best Effort, BE) mode (which refers to an optimal SR LSP calculated by an IGP by using a shortest path algorithm) and an SR traffic engineering (Traffic Engineering, TE) mode, and is applicable to various SRv6 VPNs (including a BGP SRv6 L3VPN, an EVPN SRv6 L2VPN/L3VPN, and the like). The foregoing solution is widely applied.

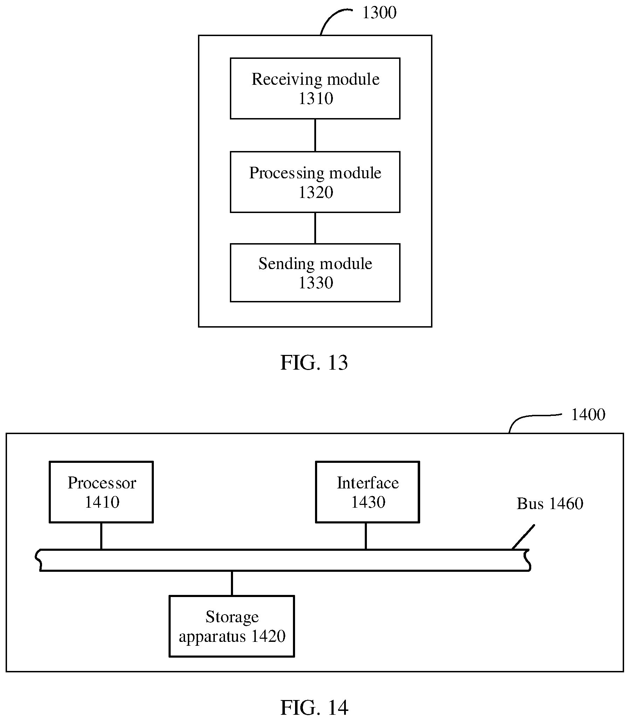

FIG. 13 is a schematic structural diagram of a data forwarding apparatus according to a non claimed embodiment of this application. As shown in FIG. 13, a data forwarding apparatus 1300 provided in this embodiment of this application may include a receiving module 1310, a processing module 1320, and a sending module 1330.

In an implementation of this embodiment of this application, the data forwarding apparatus 1300 may be configured to perform steps performed by the head node in the data forwarding method shown in any one of the foregoing embodiments.

The receiving module 1310 may be configured to obtain to-be-forwarded data.

The processing module 1320 may be configured to obtain a first SID list corresponding to the to-be-forwarded data, where the first SID list is generated based on SIDs of a part of nodes in a target forwarding path; and encapsulate, in front of the to-be-forwarded data, a packet header including the first SID list, to obtain a to-be-forwarded packet.

The sending module 1330 may be configured to send the to-be-forwarded packet based on the first SID list. The target forwarding path includes M nodes, the first SID list is generated based on first N nodes in the M nodes, the first SID list is replaced with a second SID list at an intermediate node, and the second SID list is generated based on an X^{th} node to a Y^{th} node in the M nodes, where M is greater than N, N is greater than or equal to 1, X is greater than or equal to N, and Y is less than or equal to M.

In a possible implementation of this embodiment, the receiving module 1310 may be further configured to: before the first SID list corresponding to the to-be-forwarded data is obtained, receive an SR policy sent by a controller, where the SR policy includes the first SID list.

The processing module 1320 may be specifically configured to obtain, based on a service attribute of the to-be-forwarded data, an SR policy corresponding to the to-be-forwarded data; and determine a SID list included in the SR policy as the first SID list corresponding to the to-be-forwarded data.

In a possible implementation of this embodiment, the head node is connected to an ingress edge node in a DCN through a basic forwarding network.

The target forwarding path may include: the ingress edge node in the DCN, at least one SF node in the DCN, and an egress edge node in the DCN.

The first SID list is generated based on a SID of the ingress edge node in the DCN.

The sending module 1330 may be specifically configured to send the to-be-forwarded packet to the ingress edge node in the DCN based on the first SID list through the basic forwarding network.

In a possible implementation of this embodiment, the head node is connected to an ingress edge node in a first DCN subnet in a DCN through a first basic forwarding network in a basic forwarding network, and an egress edge node in the first DCN subnet is connected to an ingress edge node in a second DCN subnet in the DCN through a second basic forwarding network in the basic forwarding network.

The target forwarding path includes: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet.

The first SID list is generated based on a SID of the ingress edge node in the first DCN subnet.

The sending module 1330 may be specifically configured to send the to-be-forwarded packet to the ingress edge node in the first DCN subnet based on the first SID list through the first basic forwarding network.

In a possible implementation of this embodiment, the head node is a PRE-AGG, the first DCN subnet is an EDC network, the second DCN subnet is an RDC network, both an ingress edge node and an egress edge node in the EDC network are PE-AGGs, and both an ingress edge node and an egress edge node in the RDC network are DCGWs.

In a possible implementation of this embodiment, the at least one SF node in the first DCN subnet and the at least one SF node in the second DCN subnet are SF nodes in a telco cloud network; and the first basic forwarding network is a metro network, and the second basic forwarding network is a core network.

In a possible implementation of this embodiment, an M^{th} node in the target forwarding path is a target node of a VPN service corresponding to the to-be-forwarded data.

The processing module 1320 may be specifically configured to encapsulate, in front of the to-be-forwarded data, an inner packet header including a SID of the target node, and encapsulate, in front of the inner packet header, an outer packet header including the first SID list; and use to-be-forwarded data having the outer packet header and the inner packet header as the to-be-forwarded packet.

The sending module 1330 may be specifically configured to send the to-be-forwarded packet based on the first SID list in the outer packet header.

In a possible implementation of this embodiment, the to-be-forwarded packet is an SRv6 packet.

In another implementation of this embodiment of this application, the data forwarding apparatus 1300 may be configured to perform steps performed by the intermediate node in the data forwarding method shown in any one of the foregoing embodiments.

The receiving module 1310 may be configured to receive a to-be-forwarded packet, where a packet header of the to-be-forwarded packet includes a first SID list.

The processing module 1320 may be configured to obtain a second SID list corresponding to the to-be-forwarded packet, and replace the first SID list in the packet header with the second SID list.

The sending module 1330 may be configured to send the to-be-forwarded packet based on the second SID list. The first SID list and the second SID list are separately generated based on SIDs of a part of nodes in a target forwarding path; and the target forwarding path includes M nodes, the first SID list is generated based on SIDs of an X^{th} node to a Y^{th} node in the M nodes, and the second SID list is generated based on SIDs of a (Y+1)^{th} node to a Z^{th} node in the M nodes, where X is greater than or equal to 1, Y is greater than or equal to X, and Z is less than or equal to M.

In a possible implementation of this embodiment, the to-be-forwarded packet may be an SRv6 packet.

In a possible implementation of this embodiment, the intermediate node may be the Y^{th} node in the M nodes.

In a possible implementation of this embodiment, the receiving module 1310 may be specifically configured to: before the second SID list corresponding to the to-be-forwarded packet is obtained, receive an SR policy sent by a controller, where the SR policy includes the second SID list.

The processing module 1320 may be specifically configured to: when an active SID in the first SID list is a SID of the intermediate node, obtain a function, where the function is used to instruct the intermediate node to replace the first SID list in the to-be-forwarded packet with the second SID list included in the SR policy; determine the second SID list included in the SR policy corresponding to the function as the second SID list corresponding to the to-be-forwarded packet; and replace the first SID list in the packet header with the second SID list based on an indication of the function.

In a possible implementation of this embodiment, the intermediate node is an ingress edge node in a DCN, and the intermediate node is connected to a basic forwarding network.

The target forwarding path includes: the ingress edge node in the DCN, at least one SF node in the DCN, and an egress edge node in the DCN.

The first SID list is generated based on a SID of the ingress edge node in the DCN, and the second SID list is generated based on a SID of the at least one SF node in the DCN and a SID of the egress edge node in the DCN.

The receiving module 1310 may be specifically configured to receive, through the basic forwarding network, the to-be-forwarded packet sent by a head node.

The sending module 1330 may be specifically configured to send the to-be-forwarded packet to a first SF node in the at least one SF node in the DCN based on the second SID list through an internal node in the DCN.

In a possible implementation of this embodiment, the intermediate node is an egress edge node in a first DCN subnet in a DCN, and an egress edge node in the first DCN subnet is connected to an ingress edge node in a second DCN subnet in the DCN through a basic forwarding network.

The target forwarding path includes: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet.

The first SID list is generated based on the at least one SF node in the first DCN subnet and the egress edge node in the first DCN subnet.

The second SID list is generated based on the ingress edge node in the second DCN subnet.

The receiving module 1310 may be specifically configured to receive, through an internal node in the first DCN subnet, the to-be-forwarded packet sent by a last SF node in the at least one SF node in the first DCN subnet.

The sending module 1330 may be specifically configured to send the to-be-forwarded packet to the ingress edge node in the second DCN subnet based on the second SID list through the basic forwarding network.

In a possible implementation of this embodiment, the first DCN subnet is an EDC network, the second DCN subnet is an RDC network, both an ingress edge node and an egress edge node in the EDC network are PE-AGGs, and both an ingress edge node and an egress edge node in the RDC network are DCGWs.

In a possible implementation of this embodiment, at least one SF node in the EDC network and at least one SF node in the RDC network are SF nodes in a telco cloud network.

In a possible implementation of this implementation, Z is less than M; an M^{th} node in the target forwarding path is a target node of a VPN service corresponding to the to-be-forwarded packet; and the to-be-forwarded packet has an outer packet header and an inner packet header. The outer packet header is encapsulated in front of the inner packet header, and the outer packet header includes the first SID list. The inner packet header includes the target node of the VPN service.

The processing module 1320 may be specifically configured to replace the first SID list in the outer packet header with the second SID list.

The sending module 1330 may be specifically configured to send the to-be-forwarded packet based on the second SID list in the outer packet header.

In still another implementation of this embodiment of this application, the data forwarding apparatus 1300 may be configured to perform steps performed by the tail node in the data forwarding method shown in any one of the foregoing embodiments.

The receiving module 1310 may be configured to receive a to-be-forwarded packet, where a packet header of the to-be-forwarded packet includes a second SID list, and the second SID list is generated based on SIDs of a part of nodes in a target forwarding path.

The processing module 1320 may be configured to remove the packet header of the to-be-forwarded packet to obtain to-be-forwarded data.

The sending module 1330 may be configured to forward the to-be-forwarded data based on a destination address of the to-be-forwarded data.

The target forwarding path includes M nodes, the second SID list is generated based on SIDs of a Z^{th} node to an M^{th} node in the M nodes, the second SID list is obtained by replacing a first SID list at an intermediate node, and the first SID list is generated based on an X^{th} node to a Y^{th} node in the M nodes, where Z is greater than 1 and less than or equal to M, X is greater than or equal to 1, and Y is less than or equal to Z; and a SID of the tail node is a last SID in the second SID list.

In yet another implementation of this embodiment of this application, the data forwarding apparatus 1300 may be configured to perform steps performed by the tail node in the data forwarding method shown in any one of the foregoing embodiments.

The receiving module 1310 may be configured to receive a to-be-forwarded packet, where the to-be-forwarded packet includes an outer packet header and an inner packet header, the outer packet header includes a second SID list, the second SID list is generated based on SIDs of a part of nodes in a target forwarding path, and the inner packet header includes a SID of a target node of a VPN service corresponding to the to-be-forwarded packet.

The processing module 1320 may be configured to remove the outer packet header of the to-be-forwarded packet to obtain a to-be-forwarded packet.

The sending module 1330 may be configured to forward the to-be-forwarded packet obtained by removing the outer packet header to the target node of the VPN service corresponding to the to-be-forwarded packet. The target forwarding path includes M nodes, and the second SID list is generated based on SIDs of an X^{th} node to an (M-1)^{th} node in the M nodes, where X is greater than 1. A SID of the tail node is a last SID in the second SID list. The target node of the VPN service is the M^{th} node.

In a further implementation of this embodiment of this application, the data forwarding apparatus 1300 may be configured to perform steps performed by the controller in the data forwarding method shown in any one of the foregoing embodiments.

The receiving module 1310 may be configured to obtain a target forwarding path, where the target forwarding path includes M nodes.

The processing module 1320 may be configured to generate a first SID list based on SIDs of a first node to an N^{th} node in the M nodes, and generate a second SID list based on SIDs of an X^{th} node to a Y^{th} node in the M nodes. The sending module 1330 may be configured to send the first SID list to a head node, and send the second SID list to an intermediate node, where the intermediate node is the N^{th} node in the M nodes, N is greater than or equal to 1, X is equal to N or N+1, and Y is less than or equal to M.

The first SID list is used by the head node to send to-be-forwarded data received by the head node; and the second SID list is used by the intermediate node to send a to-be-forwarded packet received by the intermediate node.

In a possible implementation of this embodiment, the head node is configured to encapsulate, in front of the to-be-forwarded data, a packet header by using the first SID list as a destination address in the packet header, to generate the to-be-forwarded packet; and send the to-be-forwarded packet to the intermediate node based on the destination address; and the intermediate node is configured to replace the first SID list in the packet header of the to-be-forwarded packet with the second SID list, and forward the to-be-forwarded packet based on a destination address in a packet header obtained through replacement.

In a possible implementation of this embodiment, the sending module 1330 may be specifically configured to send an SR policy 1 to the head node, where the SR policy 1 includes the first SID list.

The sending module 1330 may be specifically configured to send an SR policy 2 to the intermediate node, where the SR policy 2 includes the second SID list.

In a possible implementation of this embodiment, the controller is a DCN controller in a DCN.

A node device provided in this embodiment of this application may serve as different roles in different scenarios. For example, a same node device may serve as any one or more roles of a head node, an intermediate node, and a tail node in different SRv6 tunnels. For example, a node device 1 is a head node in a scenario 1 and is an intermediate node in a scenario 2. In addition, in one scenario, a same node device may alternatively serve as different roles. In an example, a head node and an intermediate node may be a same node device. In another example, an intermediate node and a tail node may be a same node device. In this case, the receiving module in the data forwarding apparatus configured to perform a function of the head node may further have a function of the receiving module in the data forwarding apparatus configured to perform a function of the intermediate node. Similarly, the processing module in the data forwarding apparatus configured to perform the function of the head node may further have a function of the processing module in the data forwarding apparatus configured to perform the function of the intermediate node, and the sending module in the data forwarding apparatus configured to perform the function of the head node may further have a function of the sending module in the data forwarding apparatus configured to perform the function of the intermediate node.

In this embodiment of this application, for detailed implementation processes of processing by the modules in the data forwarding apparatus, refer to the processing steps in the embodiments corresponding to FIG. 2A and FIG. 2B, FIG. 3A, FIG. 3B, and FIG. 3C, FIG. 6A and FIG. 6B, and FIG. 8A and FIG. 8B. Details are not described herein again. FIG. 14 is a schematic structural diagram of a node device according to this application. As shown in FIG. 14, this application further provides a node device 1400, including:
one or more processors 1410; and
a storage apparatus 1420, configured to store one or more programs.

When the one or more programs are executed by the one or more processors, the one or more processors are enabled to implement steps performed by the head node in the data forwarding method shown in any one of the foregoing embodiments, or steps performed by the intermediate node in the data forwarding method shown in the foregoing embodiments, or steps performed by the tail node in the data forwarding method shown in the foregoing embodiments, or steps performed by the controller in the data forwarding method shown in the foregoing embodiments.

In this embodiment of this application, the node device may further include an interface 1430. The interface may be configured to receive to-be-forwarded data or a to-be-forwarded packet sent by another node device; or configured to send, to another node device, to-be-forwarded data or a to-be-forwarded packet processed by the node device.

In this embodiment of this application, the processor, the storage apparatus, and the interface in the node device may be connected through a bus 1460.

In an implementation of this embodiment of this application, the node device may be an edge device in a DCN.

In an implementation of this embodiment of this application, the node device may be a PRE-AGG device, and may be configured to perform the steps performed by the head node in the data forwarding method shown in any one of the foregoing embodiments.

In an implementation of this embodiment of this application, the node device may be a PE-AGG device, and may be configured to perform the steps performed by the head node in the data forwarding method shown in any one of the foregoing embodiments or may be configured to perform the steps performed by the intermediate node in the data forwarding method shown in any one of the foregoing embodiments.

In an implementation of this embodiment of this application, the node device may be a DCGW device, and may be configured to perform the steps performed by the head node in the data forwarding method shown in any one of the foregoing embodiments or may be configured to perform the steps performed by the intermediate node in the data forwarding method shown in any one of the foregoing embodiments.

In an implementation of this embodiment of this application, the node device may be a DCN controller device, and may be configured to perform the steps performed by the controller in the data forwarding method shown in any one of the foregoing embodiments.

This application further provides a data forwarding system. The data forwarding system may include a head node and at least one intermediate node.

In a possible implementation, the system may further include a tail node.

In a possible implementation, the system may further include a controller.

The head node, the intermediate node, and the tail node may cooperate with each other to perform the steps performed by the nodes in the data forwarding method shown in any one of the foregoing embodiments. In an example, the head node may be a PE-AGG, the intermediate node may be a PRE-AGG and/or a DCGW, and the tail node may be a DCGW. In an example, the controller is a data center network controller DCN controller.

This application further provides a computer-readable storage medium. The computer-readable storage medium stores instructions. When the instructions are run on a computer, the instructions are used to perform the steps related to the head node in the method embodiment shown in any one of the foregoing accompanying drawings, or configured to perform the steps related to the intermediate node in the method embodiment shown in any one of the foregoing accompanying drawings, or configured to perform the steps related to the tail node in the method embodiment shown in any one of the foregoing accompanying drawings, or configured to perform the steps related to the controller in the method embodiment shown in any one of the foregoing accompanying drawings. In a possible implementation, the computer-readable storage medium may alternatively be configured to simultaneously perform steps related to at least one of the head node, the intermediate node, and the tail node.

This application provides a computer program. When the computer program is executed by a computer, the computer program is used to perform the steps related to the head node in the method embodiment shown in any one of the foregoing accompanying drawings, or configured to perform the steps related to the intermediate node in the method embodiment shown in any one of the foregoing accompanying drawings, or configured to perform the steps related to the tail node in the method embodiment shown in any one of the foregoing accompanying drawings, or configured to perform the steps related to the controller in the method embodiment shown in any one of the foregoing accompanying drawings.

All or a part of the foregoing embodiments may be implemented by using software, hardware, firmware, or any combination thereof. When software is used to implement the embodiments, the embodiments may be implemented all or partially in a form of a computer program product. The computer program product includes one or more computer instructions. When the one or more computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk), or the like.

## Claims

1. A data forwarding method, wherein the method comprises:
obtaining (S201, S301, S601, S801), by a head node, to-be-forwarded data;
obtaining (S202, S302, S602, S803), by the head node, a first segment identifier SID list corresponding to the to-be-forwarded data, wherein the first SID list is generated based on SIDs of a part of nodes in a target forwarding path;
encapsulating (S203, S303, S603, S805), by the head node in front of the to-be-forwarded data, a packet header comprising the first SID list, to obtain a to-be-forwarded packet; and
sending (S204, S304, S604, S807), by the head node, the to-be-forwarded packet based on the first SID list; wherein
the target forwarding path comprises M nodes, the first SID list is generated based on SIDs of first N nodes in the M nodes,
the first SID list comprises a SID of an intermediate node,
the SID of the intermediate node comprise a function field and a parameter argument field in
the SID, where the function field is used to indicate to replace the first SID list with a second SID list, and the argument field is used to indicate the second SID list,
and the second SID list is generated based on SIDs of an X^{th} node to a Y^{th} node in the M nodes, wherein M is greater than N, N is greater than or equal to 1, X is greater than or equal to N, and Y is less than or equal to M.

2. The method according to claim 1, wherein before the obtaining (S202, S302, S602, S803) a first SID list corresponding to the to-be-forwarded data, the method comprises: receiving, by the head node, a segment routing policy SR policy sent by a controller, wherein the SR policy comprises the first SID list; and
the obtaining (S202, S302, S602, S803) a first SID list corresponding to the to-be-forwarded data comprises: obtaining, by the head node based on a service attribute of the to-be-forwarded data, an SR policy corresponding to the to-be-forwarded data; and determining a SID list comprised in the SR policy as the first SID list corresponding to the to-be-forwarded data.

3. The method according to claim 1 or 2, wherein the head node is connected to an ingress edge node in a data center network DCN through a basic forwarding network, wherein the intermediate node is an ingress edge node in a data center network;
the target forwarding path comprises: the ingress edge node in the DCN, at least one service function SF node in the DCN, and an egress edge node in the DCN;
the first SID list is generated based on a SID of the ingress edge node in the DCN; the second SID list is generated based on a SID of the at least one SF node in the DCN and a SID of the egress edge node in the DCN; and the first SID list is replaced with the second SID list at the ingress edge node in the DCN; and
the sending (S204, S304, S604, S807) the to-be-forwarded packet based on the first SID list comprises: sending the to-be-forwarded packet to the ingress edge node in the DCN based on the first SID list through the basic forwarding network.

4. The method according to claim 1 or 2, wherein the head node is connected to an ingress edge node in a first DCN subnet in a data center network DCN through a first basic forwarding network in a basic forwarding network, and an egress edge node in the first DCN subnet is connected to an ingress edge node in a second DCN subnet in the DCN through a second basic forwarding network in the basic forwarding network;
the target forwarding path comprises: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet;
the first SID list is generated based on a SID of the ingress edge node in the first DCN subnet; the first SID list is replaced with the second SID list at the ingress edge node in the first DCN subnet, and the second SID list is generated based on at least one SF node in the first DCN subnet and the egress edge node in the first DCN subnet; and the second SID list is replaced with a third SID list at the egress edge node in the first DCN subnet, and the third SID list is generated based on the ingress edge node in the second DCN subnet; and
the sending (S204, S304, S604, S807) the to-be-forwarded packet based on the first SID list comprises: sending the to-be-forwarded packet to the ingress edge node in the first DCN subnet based on the first SID list through the first basic forwarding network.

5. The method according to claim 4, wherein the head node is a level-2 aggregation device PRE-AGG device, the first DCN subnet is an edge data center EDC network, the second DCN subnet is a regional data center RDC network, both an ingress edge node and an egress edge node in the EDC network are level-1 aggregation devices PE-AGGs, and both an ingress edge node and an egress edge node in the RDC network are data gateways DCGWs.

6. A data forwarding method, wherein the method comprises:
receiving (S204, S304, S307, S310, S604, S807), by an intermediate node, a to-be-forwarded packet, wherein a packet header of the to-be-forwarded packet comprises a first segment identifier SID list,
wherein
the first SID list comprises a SID of an intermediate node,
and the SID of the intermediate node comprise a function field and a parameter argument field in the SID, where the function field is used to indicate to replace the first SID list with a second SID list, and the argument field is used to indicate the second SID list;
obtaining (S205, S305, S308, S311, S605, S808), by the intermediate node, the second SID list corresponding to the to-be-forwarded packet;
replacing (S206, S306, S309, S312, S606, S809), by the intermediate node, the first SID list in the packet header with the second SID list; and
sending (S207, S307, S310, S313, S607, S810), by the intermediate node, the to-be-forwarded packet based on the second SID list; wherein
the first SID list and the second SID list are separately generated based on SIDs of a part of nodes in a target forwarding path; and the target forwarding path comprises M nodes, the first SID list is generated based on SIDs of an X^{th} node to a Y^{th} node in the M nodes, and the second SID list is generated based on SIDs of a (Y+1)^{th} node to a Z^{th} node in the M nodes, wherein X is greater than or equal to 1, Y is greater than or equal to X, and Z is less than or equal to M.

7. The method according to claim 6, wherein the to-be-forwarded packet is an SRv6 packet.

8. The method according to claim 6 or 7, wherein the intermediate node is the Y^{th} node in the M nodes.

9. The method according to claim 8, wherein before the obtaining a second SID list corresponding to the to-be-forwarded packet, the method comprises: receiving, by the intermediate node, an SR policy sent by a controller, wherein the SR policy comprises the second SID list;
the obtaining (S205, S305, S308, S311, S605, S808) a second SID list corresponding to the to-be-forwarded packet comprises: when an active SID in the first SID list is a SID of the intermediate node, obtaining, by the intermediate node, an operation instruction, wherein the operation instruction is used to instruct the intermediate node to replace the first SID list in the to-be-forwarded packet with the second SID list comprised in the SR policy; and determining, by the intermediate node, the second SID list comprised in the SR policy corresponding to the operation instruction as the second SID list corresponding to the to-be-forwarded packet; and
the replacing (S206, S306, S309, S312, S606, S809) the first SID list in the packet header with the second SID list comprises: replacing the first SID list in the packet header with the second SID list based on an indication of the operation instruction.

10. The method according to any one of claims 6 to 9, wherein the intermediate node is an ingress edge node in a data center network DCN, and the intermediate node is connected to a basic forwarding network;
the target forwarding path comprises: the ingress edge node in the DCN, at least one SF node in the DCN, and an egress edge node in the DCN;
the first SID list is generated based on a SID of the ingress edge node in the DCN, and the second SID list is generated based on a SID of the at least one SF node in the DCN and a SID of the egress edge node in the DCN;
the receiving (S204, S304, S307, S310, S604, S807), by an intermediate node, a to-be-forwarded packet comprises: receiving, by the intermediate node through the basic forwarding network, the to-be-forwarded packet sent by a head node; and
the sending (S207, S307, S310, S313, S607, S810) the to-be-forwarded packet based on the second SID list comprises: sending the to-be-forwarded packet to a first SF node in the at least one service function SF node in the DCN based on the second SID list through an internal node in the DCN.

11. The method according to any one of claims 6 to 9, wherein the intermediate node is an egress edge node in a first DCN subnet in a DCN, and an egress edge node in the first DCN subnet is connected to an ingress edge node in a second DCN subnet in the DCN through a basic forwarding network;
the target forwarding path comprises: the ingress edge node in the first DCN subnet, at least one SF node in the first DCN subnet, the egress edge node in the first DCN subnet, the ingress edge node in the second DCN subnet, at least one SF node in the second DCN subnet, and an egress edge node in the second DCN subnet;
the first SID list is generated based on the at least one SF node in the first DCN subnet and the egress edge node in the first DCN subnet;
the second SID list is generated based on the ingress edge node in the second DCN subnet;
the receiving (S204, S304, S307, S310, S604, S807), by an intermediate node, a to-be-forwarded packet comprises: receiving, by the intermediate node through an internal node in the first DCN subnet, the to-be-forwarded packet sent by a last SF node in the at least one SF node in the first DCN subnet; and
the sending (S207, S307, S310, S313, S607, S810) the to-be-forwarded packet based on the second SID list comprises: sending the to-be-forwarded packet to the ingress edge node in the second DCN subnet based on the second SID list through the basic forwarding network.

12. The method according to claim 11, wherein the first DCN subnet is an edge data center EDC network, the second DCN subnet is a regional data center RDC network, both an ingress edge node and an egress edge node in the EDC network are PE-AGGs, and both an ingress edge node and an egress edge node in the RDC network are DCGWs.

13. A data forwarding apparatus, applied to a network system, wherein the network system comprises a head node, an intermediate node, and a tail node, the data forwarding apparatus is the head node, and the head node comprises:
one or more processors; and
a memory, configured to store one or more computer programs, wherein the one or more computer programs comprise instructions which are executed by the one or more processors to cause the head node to perform the data forwarding method according to any one of claims 1 to 5.

14. A data forwarding apparatus, applied to a network system, wherein the network system comprises a head node, an intermediate node, and a tail node, the data forwarding apparatus is the intermediate node, and the intermediate node comprises:
one or more processors; and
a memory, configured to store one or more computer programs, wherein the one or more computer programs comprise instructions which are executed by the one or more processors to cause the head node to perform the data forwarding method according to any one of claims 6 to 12.

15. A data forwarding system, wherein the system comprises:
a head node, wherein the head node is configured to perform the data forwarding method according to any one of claims 1 to 5; and
at least one intermediate node, wherein the intermediate node is configured to perform the data forwarding method according to any one of claims 6 to 12.

## Patentansprüche

1. Datenweiterleitungsverfahren, wobei das Verfahren Folgendes umfasst:
Erlangen (S201, S301, S601, S801), durch einen Kopfknoten, von weiterzuleitenden Daten;
Erlangen (S202, S302, S602, S803), durch den Kopfknoten, einer ersten Segmentkennungsliste, SID-Liste, die den weiterzuleitenden Daten entspricht, wobei die erste SID-Liste basierend auf SIDs eines Teils von Knoten in einem Zielweiterleitungspfad generiert wird;
Einkapseln (S203, S303, S603, S805), durch den Kopfknoten vor den weiterzuleitenden Daten, eines Paketheaders, der die erste SID-Liste umfasst, um ein weiterzuleitendes Paket zu erlangen; und
Senden (S204, S304, S604, S807), durch den Kopfknoten, des weiterzuleitenden Pakets basierend auf der ersten SID-Liste; wobei
der Zielweiterleitungspfad M Knoten umfasst, die erste SID-Liste basierend auf SIDs von ersten N Knoten in den M Knoten generiert wird,
die erste SID-Liste eine SID eines Zwischenknotens umfasst,
die SID des Zwischenknotens ein Funktionsfeld und ein Parameterargumentfeld in der SID umfasst, wobei das Funktionsfeld verwendet wird, um anzugeben, dass die erste SID-Liste durch eine zweite SID-Liste zu ersetzen ist, und das Argumentfeld verwendet wird, um die zweite SID-Liste anzugeben, und die zweite SID-Liste basierend auf SIDs eines X-ten Knotens bis zu einem Y-ten Knoten in den M Knoten generiert wird, wobei M größer als N ist, N größer oder gleich 1 ist, X größer oder gleich N ist und Y kleiner oder gleich M ist.

2. Verfahren nach Anspruch 1, wobei das Verfahren vor dem Erlangen (S202, S302, S602, S803) einer ersten SID-Liste, die den weiterzuleitenden Daten entspricht, Folgendes umfasst:
Empfangen, durch den Kopfknoten, einer von einer Steuerung gesendeten Segment-Routing-Richtlinie, SR-Richtlinie, wobei die SR-Richtlinie die erste SID-Liste umfasst; und
das Erlangen (S202, S302, S602, S803) einer ersten SID-Liste,
die den weiterzuleitenden Daten entspricht, Folgendes umfasst:
Erlangen, durch den Kopfknoten basierend auf einem Dienstattribut der weiterzuleitenden Daten, einer SR-Richtlinie, die den weiterzuleitenden Daten entspricht; und Bestimmen einer in der SR-Richtlinie enthaltenen SID-Liste als die erste SID-Liste, die den weiterzuleitenden Daten entspricht.

3. Verfahren nach Anspruch 1 oder 2, wobei der Kopfknoten über ein Basisweiterleitungsnetzwerk mit einem Eingangsrandknoten in einem Datencenternetzwerk DCN verbunden ist, wobei der Zwischenknoten ein Eingangsrandknoten in einem Datencenternetzwerk ist;
der Zielweiterleitungspfad Folgendes umfasst: den Eingangsrandknoten in dem DCN, mindestens einen Dienstfunktionsknoten, SF-Knoten, in dem DCN und einen Ausgangsrandknoten in dem DCN;
die erste SID-Liste basierend auf einer SID des Eingangsrandknotens in dem DCN generiert wird; die zweite SID-Liste basierend auf einer SID des mindestens einen SF-Knotens in dem DCN und einer SID des Ausgangsrandknotens in dem DCN generiert wird; und die erste SID-Liste an dem Eingangsrandknoten in dem DCN durch die zweite SID-Liste ersetzt wird; und
das Senden (S204, S304, S604, S807) des weiterzuleitenden Pakets basierend auf der ersten SID-Liste Folgendes umfasst: Senden des weiterzuleitenden Pakets an den Eingangsrandknoten in dem DCN basierend auf der ersten SID-Liste über das Basisweiterleitungsnetzwerk.

4. Verfahren nach Anspruch 1 oder 2, wobei der Kopfknoten über ein erstes Basisweiterleitungsnetzwerk in einem Basisweiterleitungsnetzwerk mit einem Eingangsrandknoten in einem ersten DCN-Teilnetz in einem Datencenternetzwerk DCN verbunden ist und ein Ausgangsrandknoten in dem ersten DCN-Teilnetz über ein zweites Basisweiterleitungsnetzwerk in dem Basisweiterleitungsnetzwerk mit einem Eingangsrandknoten in einem zweiten DCN-Teilnetz in dem DCN verbunden ist;
der Zielweiterleitungspfad Folgendes umfasst: den Eingangsrandknoten in dem ersten DCN-Teilnetz, mindestens einen SF-Knoten in dem ersten DCN-Teilnetz, den Ausgangsrandknoten in dem ersten DCN-Teilnetz, den Eingangsrandknoten in dem zweiten DCN-Teilnetz, mindestens einen SF-Knoten in dem zweiten DCN-Teilnetz und einen Ausgangsrandknoten in dem zweiten DCN-Teilnetz;
die erste SID-Liste basierend auf einer SID des Eingangsrandknotens in dem ersten DCN-Teilnetz generiert wird; die erste SID-Liste durch die zweite SID-Liste an dem Eingangsrandknoten in dem ersten DCN-Teilnetz ersetzt wird und die zweite SID-Liste basierend auf mindestens einem SF-Knoten in dem ersten DCN-Teilnetz und dem Ausgangsrandknoten in dem ersten DCN-Teilnetz generiert wird; und die zweite SID-Liste durch eine dritte SID-Liste an dem Ausgangsrandknoten in dem ersten DCN-Teilnetz ersetzt wird und die dritte SID-Liste basierend auf dem Eingangsrandknoten in dem zweiten DCN-Teilnetz generiert wird; und
das Senden (S204, S304, S604, S807) des weiterzuleitenden Pakets basierend auf der ersten SID-Liste Folgendes umfasst: Senden des weiterzuleitenden Pakets an den Eingangsrandknoten in dem ersten DCN-Teilnetz basierend auf der ersten SID-Liste über das erste Basisweiterleitungsnetzwerk.

5. Verfahren nach Anspruch 4, wobei der Kopfknoten eine Level-2-Aggregationsvorrichtung, PRE-AGG-Vorrichtung, ist, das erste DCN-Teilnetz ein Randdatencenternetzwerk, EDC-Netzwerk, ist, das zweite DCN-Teilnetz ein regionales Datencenternetzwerk, RDC-Netzwerk, ist, sowohl ein Eingangsrandknoten als auch ein Ausgangsrandknoten in dem EDC-Netzwerk Level-1-Aggregationsvorrichtungen PE-AGGs sind und sowohl ein Eingangsrandknoten als auch ein Ausgangsrandknoten in dem RDC-Netzwerk Daten-Gateways, DCGWs, sind.

6. Datenweiterleitungsverfahren, wobei das Verfahren Folgendes umfasst:
Empfangen (S204, S304, S307, S310, S604, S807), durch einen Zwischenknoten, eines weiterzuleitenden Pakets, wobei ein Paketheader des weiterzuleitenden Pakets eine erste Segmentkennungsliste, SID-Liste, umfasst,
wobei
die erste SID-Liste eine SID eines Zwischenknotens umfasst,
und die SID des Zwischenknotens ein Funktionsfeld und ein Parameterargumentfeld in der SID umfasst, wobei das Funktionsfeld verwendet wird, um anzugeben, dass die erste SID-Liste durch eine zweite SID-Liste zu ersetzen ist, und das Argumentfeld verwendet wird, um die zweite SID-Liste anzugeben; Erlangen (S205, S305, S308, S311, S605, S808), durch den Zwischenknoten, der zweiten SID-Liste, die dem weiterzuleitenden Paket entspricht;
Ersetzen (S206, S306, S309, S312, S606, S809), durch den Zwischenknoten, der ersten SID-Liste in dem Paketheader durch die zweite SID-Liste; und
Senden (S207, S307, S310, S313, S607, S810), durch den Zwischenknoten, des weiterzuleitenden Pakets basierend auf der zweiten SID-Liste; wobei
die erste SID-Liste und die zweite SID-Liste basierend auf SIDs eines Teils von Knoten in einem Zielweiterleitungspfad getrennt generiert werden; und der Zielweiterleitungspfad M Knoten umfasst, wobei die erste SID-Liste basierend auf SIDs eines X-ten Knotens bis zu einem Y-ten Knoten in den M Knoten generiert wird und die zweite SID-Liste basierend auf SIDs eines (Y+1)-ten Knotens bis zu einem Z-ten Knoten in den M Knoten generiert wird, wobei X größer oder gleich 1 ist, Y größer oder gleich X ist und Z kleiner oder gleich M ist.

7. Verfahren nach Anspruch 6, wobei das weiterzuleitende Paket ein SRv6-Paket ist.

8. Verfahren nach Anspruch 6 oder 7, wobei der Zwischenknoten der Y-te Knoten in den M Knoten ist.

9. Verfahren nach Anspruch 8, wobei das Verfahren vor dem Erlangen einer zweiten SID-Liste, die dem weiterzuleitenden Paket entspricht, Folgendes umfasst: Empfangen, durch den Zwischenknoten, einer von einer Steuerung gesendeten SR-Richtlinie, wobei die SR-Richtlinie die zweite SID-Liste umfasst;
das Erlangen (S205, S305, S308, S311, S605, S808) einer zweiten SID-Liste, die dem weiterzuleitenden Paket entspricht, Folgendes umfasst: wenn eine aktive SID in der ersten SID-Liste eine SID des Zwischenknotens ist, Erlangen, durch den Zwischenknoten, einer Betriebsanweisung, wobei die Betriebsanweisung verwendet wird, um den Zwischenknoten anzuweisen, die erste SID-Liste in dem weiterzuleitenden Paket durch die zweite in der SR-Richtlinie enthaltenen SID-Liste zu ersetzen; und Bestimmen, durch den Zwischenknoten, der zweiten in der SR-Richtlinie enthaltenen SID-Liste, die der Betriebsanweisung entspricht, als die zweite SID-Liste, die dem weiterzuleitenden Paket entspricht; und
das Ersetzen (S206, S306, S309, S312, S606, S809) der ersten SID-Liste in dem Paketheader durch die zweite SID-Liste Folgendes umfasst: Ersetzen der ersten SID-Liste in dem Paketheader durch die zweite SID-Liste basierend auf einer Angabe der Betriebsanweisung.

10. Verfahren nach einem der Ansprüche 6 bis 9, wobei der Zwischenknoten ein Eingangsrandknoten in einem Datencenternetzwerk DCN ist und der Zwischenknoten mit einem Basisweiterleitungsnetzwerk verbunden ist;
der Zielweiterleitungspfad Folgendes umfasst: den Eingangsrandknoten in dem DCN, mindestens einen SF-Knoten in dem DCN und einen Ausgangsrandknoten in dem DCN;
die erste SID-Liste basierend auf einer SID des Eingangsrandknotens in dem DCN generiert wird und die zweite SID-Liste basierend auf einer SID des mindestens einen SF-Knotens in dem DCN und einer SID des Ausgangsrandknotens in dem DCN generiert wird;
das Empfangen (S204, S304, S307, S310, S604, S807), durch einen Zwischenknoten, eines weiterzuleitenden Pakets Folgendes umfasst: Empfangen, durch den Zwischenknoten über das BasisWeiterleitungsnetzwerk, des von einem Kopfknoten gesendeten weiterzuleitenden Pakets; und
das Senden (S207, S307, S310, S313, S607, S810) des weiterzuleitenden Pakets basierend auf der zweiten SID-Liste Folgendes umfasst: Senden des weiterzuleitenden Pakets an einen ersten SF-Knoten in dem mindestens einen Servicefunktionsknoten, SF-Knoten, in dem DCN basierend auf der zweiten SID-Liste über einen internen Knoten in dem DCN.

11. Verfahren nach einem der Ansprüche 6 bis 9, wobei der Zwischenknoten ein Ausgangsrandknoten in einem ersten DCN-Teilnetz in einem DCN ist und ein Ausgangsrandknoten in dem ersten DCN-Teilnetz über ein Basisweiterleitungsnetzwerk mit einem Eingangsrandknoten in einem zweiten DCN-Teilnetz in dem DCN verbunden ist;
der Zielweiterleitungspfad Folgendes umfasst: den Eingangsrandknoten in dem ersten DCN-Teilnetz, mindestens einen SF-Knoten in dem ersten DCN-Teilnetz, den Ausgangsrandknoten in dem ersten DCN-Teilnetz, den Eingangsrandknoten in dem zweiten DCN-Teilnetz, mindestens einen SF-Knoten in dem zweiten DCN-Teilnetz und einen Ausgangsrandknoten in dem zweiten DCN-Teilnetz;
die erste SID-Liste basierend auf dem mindestens einen SF-Knoten in dem ersten DCN-Teilnetz und dem Ausgangsrandknoten in dem ersten DCN-Teilnetz generiert wird;
die zweite SID-Liste basierend auf dem Eingangsrandknoten in dem zweiten DCN-Teilnetz generiert wird;
das Empfangen (S204, S304, S307, S310, S604, S807), durch einen Zwischenknoten, eines weiterzuleitenden Pakets Folgendes umfasst: Empfangen, über den Zwischenknoten über einen internen Knoten in dem ersten DCN-Teilnetz, des weiterzuleitenden Pakets, das von einem letzten SF-Knoten in dem mindestens einen SF-Knoten in dem ersten DCN-Teilnetz gesendet wurde; und
das Senden (S207, S307, S310, S313, S607, S810) des weiterzuleitenden Pakets basierend auf der zweiten SID-Liste Folgendes umfasst: Senden des weiterzuleitenden Pakets an den Eingangsrandknoten in dem zweiten DCN-Teilnetz basierend auf der zweiten SID-Liste über das Basisweiterleitungsnetzwerk.

12. Verfahren nach Anspruch 11, wobei das erste DCN-Teilnetz ein Randdatencenternetzwerk, EDC-Netzwerk, ist, das zweite DCN-Teilnetz ein regionales Datencenternetzwerk, RDC-Netzwerk, ist, sowohl ein Eingangsrandknoten als auch ein Ausgangsrandknoten in dem EDC-Netzwerk PE-AGGs sind und sowohl ein Eingangsrandknoten als auch ein Ausgangsrandknoten in dem RDC-Netzwerk DCGWs sind.

13. Datenweiterleitungsvorrichtung, die auf ein Netzwerksystem angewendet wird, wobei das Netzwerksystem einen Kopfknoten, einen Zwischenknoten und einen Endknoten umfasst, die Datenweiterleitungsvorrichtung der Kopfknoten ist und der Kopfknoten Folgendes umfasst:
einen oder mehrere Prozessoren; und
einen Speicher, der dazu konfiguriert ist, ein oder mehrere Computerprogramme zu speichern, wobei das eine oder die mehreren Computerprogramme Anweisungen umfassen, die durch den einen oder die mehreren Prozessoren ausgeführt werden, um zu bewirken, dass der Kopfknoten das Datenweiterleitungsverfahren nach einem der Ansprüche 1 bis 5 durchführt.

14. Datenweiterleitungsvorrichtung, die auf ein Netzwerksystem angewendet wird, wobei das Netzwerksystem einen Kopfknoten, einen Zwischenknoten und einen Endknoten umfasst, die Datenweiterleitungsvorrichtung der Zwischenknoten ist und der Zwischenknoten Folgendes umfasst:
einen oder mehrere Prozessoren; und
einen Speicher, der dazu konfiguriert ist, ein oder mehrere Computerprogramme zu speichern, wobei das eine oder die mehreren Computerprogramme Anweisungen umfassen, die durch den einen oder die mehreren Prozessoren ausgeführt werden, um zu bewirken, dass der Kopfknoten das Datenweiterleitungsverfahren nach einem der Ansprüche 6 bis 12 durchführt.

15. Datenweiterleitungssystem, wobei das System Folgendes umfasst:
einen Kopfknoten, wobei der Kopfknoten dazu konfiguriert ist, das Datenweiterleitungsverfahren nach einem der Ansprüche 1 bis 5 durchzuführen; und
mindestens einen Zwischenknoten, wobei der Zwischenknoten dazu konfiguriert ist, das Datenweiterleitungsverfahren nach einem der Ansprüche 6 bis 12 durchzuführen.

## Revendications

1. Procédé de transfert de données, dans lequel le procédé comprend :
l'obtention (S201, S301, S601, S801), par un noeud principal, de données à transférer ;
l'obtention (S202, S302, S602, S803), par le noeud principal, d'une première liste d'identifiants de segment SID correspondant aux données à transférer, dans lequel la première liste de SID étant générée sur la base des SID d'une partie de noeuds dans un trajet de transfert cible ;
l'encapsulation (S203, S303, S603, S805), par le noeud principal devant les données à transférer, d'un en-tête de paquet comprenant la première liste de SID, pour obtenir un paquet à transférer ; et
l'envoi (S204, S304, S604, S807), par le noeud principal, du paquet à transférer sur la base de la première liste de SID ;
dans lequel
le trajet de transfert cible comprend M noeuds, la première liste de SID est générée sur la base de SID de N premiers noeuds dans les M noeuds,
la première liste de SID comprend un SID d'un noeud intermédiaire, le SID du noeud intermédiaire comprend un champ de fonction et un champ d'argument de paramètre dans le SID, où le champ de fonction est utilisé pour indiquer le remplacement de la première liste de SID par une deuxième liste de SID, et le champ d'argument est utilisé pour indiquer la deuxième liste de SID, et la deuxième liste de SID est générée sur la base de SID d'un X^{ième} noeud à un Y^{ième} noeud dans les M noeuds, dans lequel M est supérieur à N, N est supérieur ou égal à 1, X est supérieur ou égal à N, et Y est inférieur ou égal à M.

2. Procédé selon la revendication 1, dans lequel avant l'obtention (S202, S302, S602, S803) d'une première liste de SID correspondant aux données à transférer, le procédé comprend :
la réception, par le noeud principal, d'une politique de routage de segment SR envoyée par un dispositif de commande, dans lequel la politique SR comprend la première liste de SID ; et
l'obtention (S202, S302, S602, S803) d'une première liste de SID correspondant aux données à transférer comprend : l'obtention, par le noeud principal sur la base d'un attribut de service des données à transférer, d'une politique SR correspondant aux données à transférer ; et la détermination d'une liste de SID comprise dans la politique SR en tant que première liste de SID correspondant aux données à transférer.

3. Procédé selon la revendication 1 ou 2, dans lequel le noeud principal est connecté à un noeud périphérique d'entrée dans un réseau de centre de données DCN à travers un réseau de transfert de base, dans lequel le noeud intermédiaire est un noeud périphérique d'entrée dans un réseau de centre de données ;
le trajet de transfert cible comprend : le noeud périphérique d'entrée dans le DCN, au moins un noeud de fonction de service SF dans le DCN et un noeud périphérique de sortie dans le DCN ; la première liste de SID est générée sur la base d'un SID du noeud périphérique d'entrée dans le DCN ; la deuxième liste de SID est générée sur la base d'un SID de l'au moins un noeud SF dans le DCN et d'un SID du noeud périphérique de sortie dans le DCN ; et la première liste de SID est remplacée par la deuxième liste de SID au niveau du noeud périphérique d'entrée dans le DCN ; et
l'envoi (S204, S304, S604, S807) du paquet à transférer sur la base de la première liste de SID comprend : l'envoi du paquet à transférer au noeud périphérique d'entrée dans le DCN sur la base de la première liste de SID à travers le réseau de transfert de base.

4. Procédé selon la revendication 1 ou 2, dans lequel le noeud principal est connecté à un noeud périphérique d'entrée dans un premier sous-réseau DCN dans un réseau de centre de données DCN à travers un premier réseau de transfert de base dans un réseau de transfert de base, et un noeud périphérique de sortie dans le premier sous-réseau DCN est connecté à un noeud périphérique d'entrée dans un second sous-réseau DCN dans le DCN à travers un second réseau de transfert de base dans le réseau de transfert de base ;
le trajet de transfert cible comprend : le noeud périphérique d'entrée dans le premier sous-réseau DCN, au moins un noeud SF dans le premier sous-réseau DCN, le noeud périphérique de sortie dans le premier sous-réseau DCN, le noeud périphérique d'entrée dans le second sous-réseau DCN, au moins un noeud SF dans le second sous-réseau DCN et un noeud périphérique de sortie dans le second sous-réseau DCN ;
la première liste de SID est générée sur la base d'un SID du noeud périphérique d'entrée dans le premier sous-réseau DCN ; la première liste de SID est remplacée par la deuxième liste de SID au niveau du noeud périphérique d'entrée dans le premier sous-réseau DCN, et la deuxième liste de SID est générée sur la base d'au moins un noeud SF dans le premier sous-réseau DCN et du noeud périphérique de sortie dans le premier sous-réseau DCN ; et la deuxième liste de SID est remplacée par une troisième liste de SID au niveau du noeud périphérique de sortie dans le premier sous-réseau DCN, et la troisième liste de SID est générée sur la base du noeud périphérique d'entrée dans le second sous-réseau DCN ; et
l'envoi (S204, S304, S604, S807) du paquet à transférer sur la base de la première liste de SID comprend : l'envoi du paquet à transférer au noeud périphérique d'entrée dans le premier sous-réseau DCN sur la base de la première liste de SID à travers le premier réseau de transfert de base.

5. Procédé selon la revendication 4, dans lequel le noeud principal est un dispositif d'agrégation de niveau 2 PRE-AGG, le premier sous-réseau DCN est un réseau de centre de données périphérique EDC, le second sous-réseau DCN est un réseau de centre de données régional RDC, un noeud périphérique d'entrée et un noeud périphérique de sortie dans le réseau EDC sont tous deux des dispositifs d'agrégation de niveau 1 PE-AGG, et un noeud périphérique d'entrée et un noeud périphérique de sortie dans le réseau RDC sont tous deux des passerelles de données DCGW.

6. Procédé de transfert de données, dans lequel le procédé comprend :
la réception (S204, S304, S307, S310, S604, S807), par un noeud intermédiaire, d'un paquet à transférer, dans lequel un en-tête de paquet du paquet à transférer comprend une première liste d'identifiants de segment SID,
dans lequel
la première liste de SID comprend un SID d'un noeud intermédiaire, et le SID du noeud intermédiaire comprend un champ de fonction et un champ d'argument de paramètre dans le SID, où le champ de fonction est utilisé pour indiquer le remplacement de la première liste de SID par une deuxième liste de SID, et le champ d'argument est utilisé pour indiquer la deuxième liste de SID ; l'obtention (S205, S305, S308, S311, S605, S808), par le noeud intermédiaire, de la deuxième liste de SID correspondant au paquet à transférer ;
le remplacement (S206, S306, S309, S312, S606, S809), par le noeud intermédiaire, de la première liste de SID dans l'en-tête de paquet par la deuxième liste de SID ; et
l'envoi (S207, S307, S310, S313, S607, S810), par le noeud intermédiaire, du paquet à transférer sur la base de la deuxième liste de SID ; dans lequel
la première liste de SID et la deuxième liste de SID sont générées séparément sur la base de SID d'une partie de noeuds dans un trajet de transfert cible ; et le trajet de transfert cible comprend M noeuds, la première liste de SID est générée sur la base des SID d'un X^{ième} noeud vers un Y^{ième} noeud dans les M noeuds, et la deuxième liste de SID est générée sur la base de SID d'un (Y+1)^{ième} noeud à un Z^{ième} nœud parmi les M noeuds, dans lequel X est supérieur ou égal à 1, Y est supérieur ou égal à X et Z est inférieur ou égal à M.

7. Procédé selon la revendication 6, dans lequel le paquet à transférer est un paquet SRv6.

8. Procédé selon la revendication 6 ou 7, dans lequel le noeud intermédiaire est le Y^{ième} noeud parmi les M noeuds.

9. Procédé selon la revendication 8, dans lequel avant l'obtention d'une deuxième liste de SID correspondant au paquet à transférer, le procédé comprend : la réception, par le noeud intermédiaire, d'une politique SR envoyée par un dispositif de commande, dans lequel la politique SR comprend la deuxième liste de SID ;
l'obtention (S205, S305, S308, S311, S605, S808) d'une deuxième liste de SID correspondant au paquet à transférer comprend :
lorsqu'un SID actif dans la première liste de SID est un SID du noeud intermédiaire, l'obtention, par le noeud intermédiaire, d'une instruction de fonctionnement, dans lequel l'instruction de fonctionnement est utilisée pour demander au noeud intermédiaire de remplacer la première liste de SID dans le paquet à transférer par la deuxième liste de SID comprise dans la politique SR ; et la détermination, par le noeud intermédiaire, de la deuxième liste de SID comprise dans la politique SR correspondant à l'instruction de fonctionnement en tant que deuxième liste de SID correspondant au paquet à transférer ; et
le remplacement (S206, S306, S309, S312, S606, S809) de la première liste de SID dans l'en-tête de paquet par la deuxième liste de SID comprend : le remplacement de la première liste de SID dans l'en-tête de paquet par la deuxième liste de SID sur la base d'une indication de l'instruction de fonctionnement.

10. Procédé selon l'une quelconque des revendications 6 à 9, dans lequel le noeud intermédiaire est un noeud périphérique d'entrée dans un réseau de centre de données DCN, et le noeud intermédiaire est connecté à un réseau de transfert de base ;
le trajet de transfert cible comprend : le noeud périphérique d'entrée dans le DCN, au moins un noeud SF dans le DCN et un noeud périphérique de sortie dans le DCN ;
la première liste de SID est générée sur la base d'un SID du noeud périphérique d'entrée dans le DCN, et la deuxième liste de SID est générée sur la base d'un SID de l'au moins un noeud SF dans le DCN et d'un SID du noeud périphérique de sortie dans le DCN ;
la réception (S204, S304, S307, S310, S604, S807), par un noeud intermédiaire, d'un paquet à transférer comprend : la réception, par le noeud intermédiaire à travers le réseau de transfert de base, du paquet à transférer envoyé par un noeud principal ; et l'envoi (S207, S307, S310, S313, S607, S810) du paquet à transférer sur la base de la deuxième liste de SID comprend : l'envoi du paquet à transférer à un premier noeud SF dans l'au moins un noeud de fonction de service SF dans le DCN sur la base de la deuxième liste de SID à travers un noeud interne dans le DCN.

11. Procédé selon l'une quelconque des revendications 6 à 9, dans lequel le noeud intermédiaire est un noeud périphérique de sortie dans un premier sous-réseau DCN dans un DCN, et un noeud périphérique de sortie dans le premier sous-réseau DCN est connecté à un noeud périphérique d'entrée dans un second sous-réseau DCN dans le DCN à travers un réseau de transfert de base ; le trajet de transfert cible comprend : le noeud périphérique d'entrée dans le premier sous-réseau DCN, au moins un noeud SF dans le premier sous-réseau DCN, le noeud périphérique de sortie dans le premier sous-réseau DCN, le noeud périphérique d'entrée dans le second sous-réseau DCN, au moins un noeud SF dans le second sous-réseau DCN et un noeud périphérique de sortie dans le second sous-réseau DCN ;
la première liste de SID est générée sur la base de l'au moins un noeud SF dans le premier sous-réseau DCN et du noeud périphérique de sortie dans le premier sous-réseau DCN ;
la deuxième liste de SID est générée sur la base du noeud périphérique d'entrée dans le second sous-réseau DCN ;
la réception (S204, S304, S307, S310, S604, S807), par un noeud intermédiaire, d'un paquet à transférer comprend : la réception, par le noeud intermédiaire à travers un noeud interne dans le premier sous-réseau DCN, du paquet à transférer envoyé par un dernier noeud SF dans l'au moins un noeud SF dans le premier sous-réseau DCN ; et
l'envoi (S207, S307, S310, S313, S607, S810) du paquet à transférer sur la base de la deuxième liste de SID comprend : l'envoi du paquet à transférer au noeud périphérique d'entrée dans le second sous-réseau DCN sur la base de la deuxième liste de SID à travers le réseau de transfert de base.

12. Procédé selon la revendication 11, dans lequel le premier sous-réseau DCN est un réseau de centre de données périphérique EDC, le second sous-réseau DCN est un réseau de centre de données régional RDC, un noeud périphérique d'entrée et un noeud périphérique de sortie dans le réseau EDC sont tous deux des PE-AGG, et un noeud périphérique d'entrée et un noeud périphérique de sortie dans le réseau RDC sont tous deux des DCGW.

13. Appareil de transfert de données, appliqué à un système de réseau, dans lequel le système de réseau comprend un noeud principal, un noeud intermédiaire et un noeud de queue, l'appareil de transfert de données est le noeud principal, et le noeud principal comprend :
un ou plusieurs processeurs ; et
une mémoire, configurée pour stocker un ou plusieurs programmes informatiques, dans lequel l'un ou les plusieurs programmes informatiques comprennent des instructions qui sont exécutées par l'un ou les plusieurs processeurs pour amener le noeud principal à exécuter le procédé de transfert de données selon l'une quelconque des revendications 1 à 5.

14. Appareil de transfert de données, appliqué à un système de réseau, dans lequel le système de réseau comprend un noeud principal, un noeud intermédiaire et un noeud de queue, l'appareil de transfert de données est le noeud intermédiaire, et le noeud intermédiaire comprend :
un ou plusieurs processeurs ; et
une mémoire, configurée pour stocker un ou plusieurs programmes informatiques, dans lequel l'un ou les plusieurs programmes informatiques comprennent des instructions qui sont exécutées par l'un ou les plusieurs processeurs pour amener le noeud principal à mettre en oeuvre le procédé de transfert de données selon l'une quelconque des revendications 6 à 12.

15. Système de transfert de données, dans lequel le système comprend :
un noeud principal, dans lequel le noeud principal est configuré pour mettre en oeuvre le procédé de transfert de données selon l'une quelconque des revendications 1 à 5 ; et
au moins un noeud intermédiaire, dans lequel le noeud intermédiaire est configuré pour mettre en oeuvre le procédé de transfert de données selon l'une quelconque des revendications 6 à 12.
